# EUROPEAN PATENT SPECIFICATION

(11) **EP 1 354 446 B1**
(45) Date of publication and mention of the grant of the patent: **12.04.2006**
(21) Application number: 02709006.7
(22) Date of filing: 11.01.2002
(51) Int. Cl.: H04L 12/00, H04L 12/28

(54) **SMALL BUILDING AUTOMATION CONTROL SYSTEM**
SYSTEN ZUR ÜBERWACHUNG DER AUTOMATISIERUNG IN EINEM KLEINEN GEBÄUDE
SYSTEME DE COMMANDE DES APPLICATIONS D'AUTOMATISATION DANS DE PETITS EDIFICES

(30) Priority: 12.01.2001 US 261488 P
(43) Date of publication of application: 22.10.2003
(73) Proprietor: Novar Marketing Inc., Wilmington Delaware 19081 (US)
(72) Inventor: ARNOLD, Bruce, Murrysville, PA 15668 (US); HEFFEREN, Peter, J., Pittsburgh, PA 15235 (US); KIKTA, Christopher, Pittsburgh, PA 15239 (US); MAJEWSKI, Joseph, Mt. Lebanon, PA 15243 (US)
(74) Representative: Miller, James Lionel Woolverton
(86) International application number: PCT/US2002/000835
(87) International publication number: WO 2002/056540

(56) References cited:
- EP-A- 0 948 161
- WO-A-00/23907
- US-A- 5 550 980
- US-A- 5 875 430
- US-A- 5 905 906

## Description

The present invention relates to building control systems, and more particularly to control systems for integrating and controlling the operation of various automated applications within a small building.

In large commercial buildings sophisticated PC networks are used to automate and control the operation of HVAC and lighting to assure comfort and efficiency. These various Intelligent Building Systems (IBS) may also be configured to monitor the safety of the property, contents and people in the building. Whether the building is occupied or empty, these IBS systems keep watchful control over the fire and security status, the comfort and energy consumption, and the effects of changing weather or occupancy to efficiently operate the entire physical plant. Specially trained engineers, programmers, commissioning and maintenance technicians design, program, install and maintain these expensive and complex multiple IBS systems. After installation, the complexity of these IBS systems requires that they be operated by trained building technical and security staff. Typically, this staff is dedicated to the use and operation of the various IBS

These IBS systems integrate, at a host level on a PC workstation(s), the individual computerized control functions of access, security, HVAC, lighting, and fire protection in an effort to provide occupant comfort, safety, and convenience, both during and after working hours. These IBS systems adjust the building's various applications based upon preprogrammed instructions and can provide management reports of abnormal conditions (alarms), property usage and energy consumption, operating trends and maintenance information. In a complex IBS, these systems may turn on lights, adjust the HVAC for comfort, turn security systems to the occupied status, enable elevators, and compensate for prevailing weather at the beginning of a day. At the end of the day these complex IBS's may reverse the process to maximize efficiency, minimize energy cost and provide for occupant and property protection. The interaction of preprogrammed parameters, real time sensor inputs, and operating events make these IBS's adjust automatically to schedules, occupant requirements, and the need of the management for timely indications of, and interactions for, planned and exceptional circumstances.

Unfortunately, this level of computerized control and machine interaction is expensive and currently affordable only in large buildings, for example, buildings of approximately 200,000 square feet and larger. The cost of putting a PC into service alone can mean that these IBSs cannot compete within the cost constraints in small buildings. Putting aside the complexity issues attendant to a PC based IBS, widespread acceptance of these IBS in properties with a $10,000 control budget is unexpected because the cost of adding a PC and associated software alone adds $3,000 - 30% cost premium to the traditional controls budget. As a result, the control technology available to smaller buildings has been limited to the kinds of discrete stand-alone HVAC control or lighting control, or security system that is used in residential property. For example, small building typically include little more than a timing device for each HVAC unit, lighting control at each lighting panel, and separate burglar alarm type security. Each device operates independent of the other controls in the building and each has no central point of reporting or adjustment. This means that every change in use or schedule must typically be entered again and again into each controller by the maintenance personnel. Changes of schedule, or season, or use result in tedious and laborious modification to the various discrete applications. In many cases, operating parameters are selected as a matter of convenience for the maintenance person with little concern for efficiency, cost avoidance, or occupant convenience.

US5875430 discloses a bi-directional communication network for providing customer data and diagnostic information pertaining to kitchen appliances.

US5905906 discloses a control system for configuring printers in a print network, where each printer communicates in an industry standard network protocol. EP0948161 also discloses a control system for configuring printers in a print network.

### SUMMARY OF THE INVENTION

The aforementioned problems are overcome by the present invention providing a building control system according to claim 1 The control interface includes a database which permits autoconfiguration of the application controllers.

Various embodiments are provided according to the dependent claims.

These and other objects, advantages, and features of the invention will be readily understood and appreciated by reference to the detailed description of the preferred embodiment and the drawings.

### BRIEF DESCRIPTION OF THE DRAWINGS

Fig. 1 schematic diagram showing the various components of a control system in accordance with a preferred embodiment of the present invention;

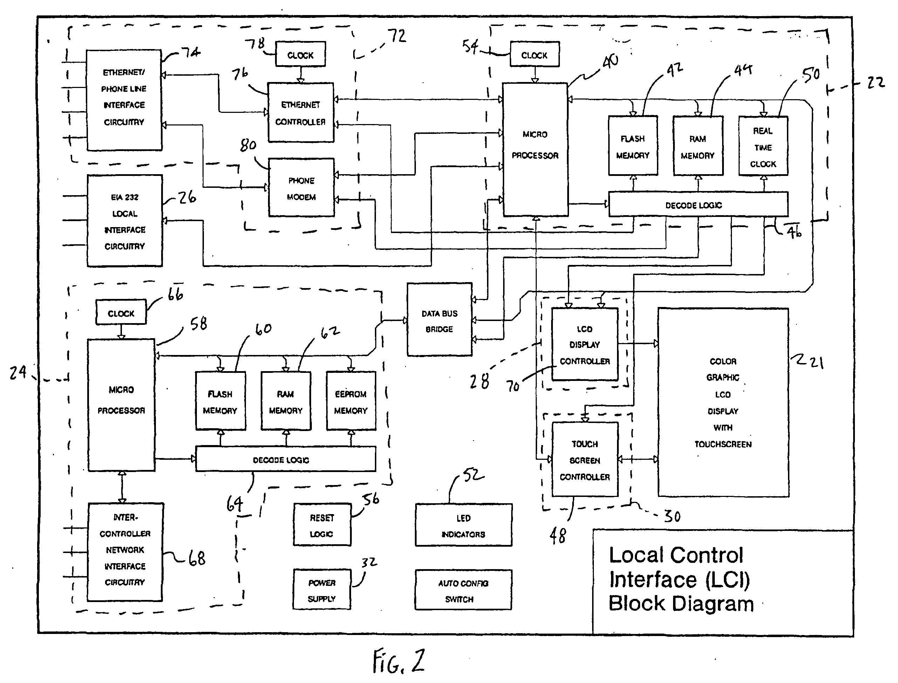

Fig. 2 is a block diagram illustrating the components of the local control interface;

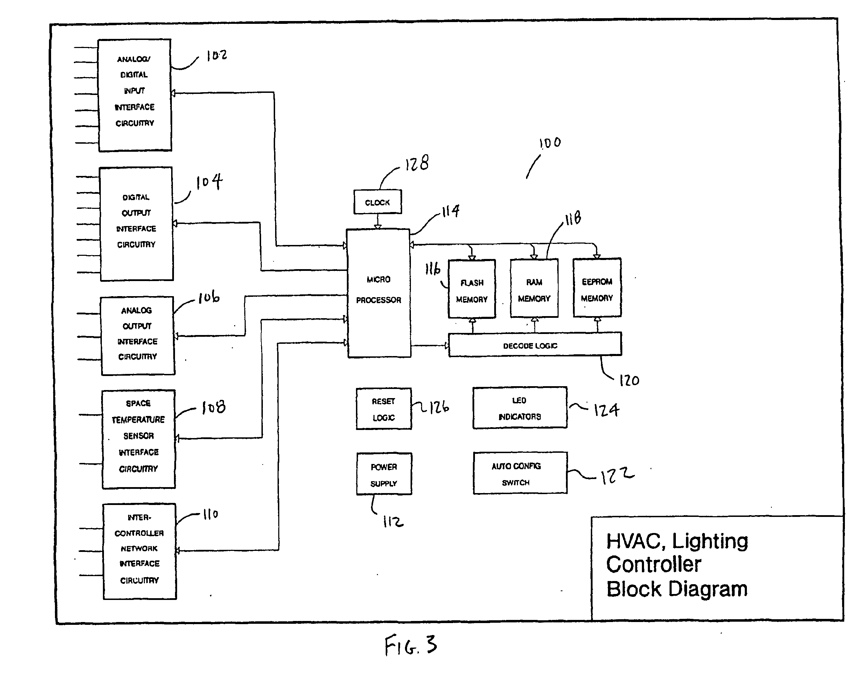

Fig. 3 is a block diagram illustrating the components of the HVAC and lighting application controllers;

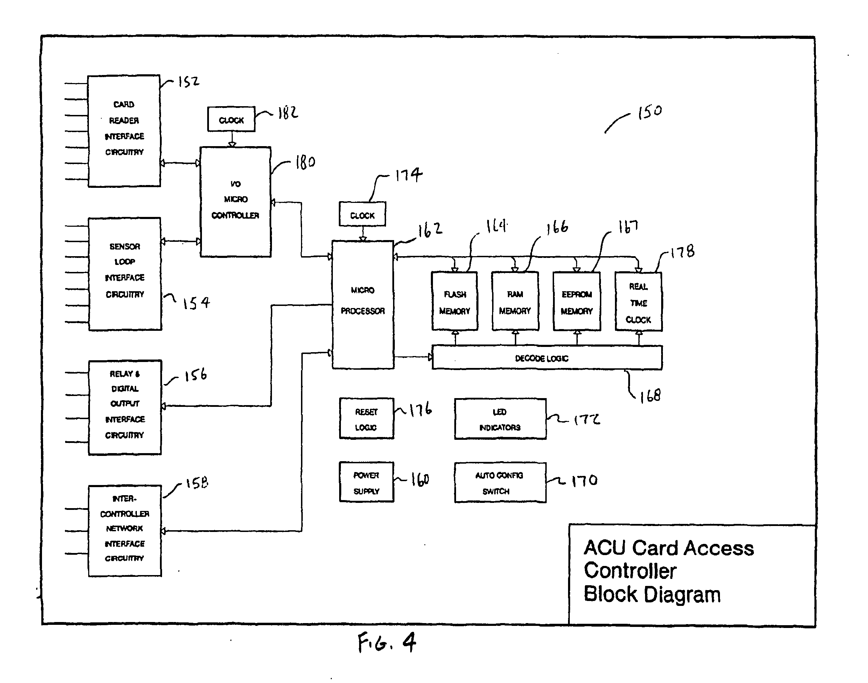

Fig. 4 is a block diagram illustrating the components of the access control application controller;
Fig. 5 is a schematic diagram of an ASM-1;
Fig. 6 is a schematic diagram of an LCU-1;
Fig. 7 is a typical thermostat module system diagram;
Fig. 8 is a representation of the data structure for an HVAC control ping;
Fig. 9 is a representation of the data structure for an HVAC response message;
Fig. 10 is a representation of the data structure for an ACU control ping;
Fig. 11 is a representation of the data structure for an ACU response message;
Fig. 12 is a representation of the data structure for an ASM control ping;
Fig. 13 is a representation of the data structure for an ASM response message;
Figs. 14A-14B are a flow chart showing the steps of a preferred embodiment of the automated configuration process;
Fig. 15 is a representation of the data structure for an access request message;
Fig. 16 is a representation of the data structure for an access response message;
Fig. 17 is a representation of the data structure for a door user message;
Fig. 18 is a representation of the data structure for an alarm message;
Fig. 19 is a representation of the data structure for an LCU control ping; and
Fig. 20 is a representation of the data structure for an LCU response message.

### DETAILED DESCRIPTION OF THE PREFERRED EMBODIMENT

### I. Control System Overview

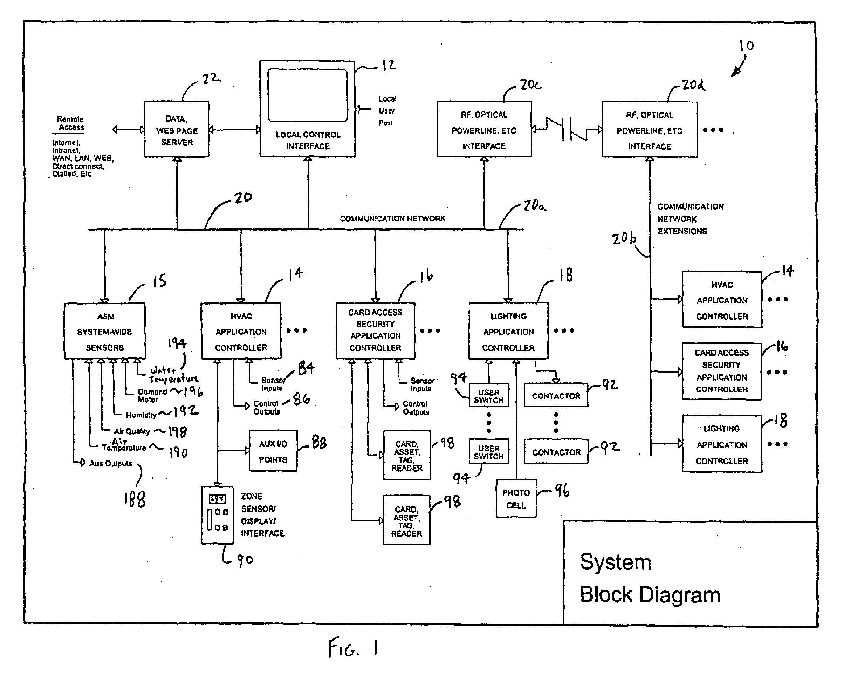

A schematic diagram illustrating the architecture of a control system according to a preferred embodiment is shown in Fig. 1 and generally designated 10. The control system 10 is a distributed control system having a local control interface 12 and a plurality of application controllers 14, 15, 16 and 18 interconnected by a conventional communications network 20. The local control interface 12 manages the control system 10 providing direct digital control of the application controllers. Each application controller controls operation of a corresponding application, such as HVAC application controller 14, card access/security application controller 16, lighting application controller 18 and system-wide sensor controller 15. The application controllers are generally stand-alone controllers operating in accordance with various control variables. The local control interface 12 provides a user interface for monitoring system parameters, changing the value of control variables and managing alarms and events. Through this functionality, the local control interface 12 provides integration between application controllers 14, 15, 16 and 18, including application controllers of different types. The local control interface 12 is preprogrammed with profiles of the various types of application controllers 14, 15, 16 and 18 that are supported by the system 10, including the relevant control variables for each. Additionally, the local control interface 12 may acquire a profile from an application controller at the time of self-configuration, for example, if the application is unknown to the local control interface 12 or a new or customized version of the profile is available. Profiles may also be downloaded through the local control interface 12 or remote access such as the Internet or a dialed or direct connection. These profiles permit self-configuration of the application controllers. This specification describes a preferred embodiment of the present invention, providing sufficient detail for one skilled in the art to practice the claimed invention.

### II. Control System Components

As noted above, the present invention is directed to a small building control system including a local control interface 12 and a variety of application controllers 14, 15, 16 and 18 that communicate over a conventional communications network 20.

### A. Communications Network

The communications network 20 may be any of a variety of conventional hardwire networks, for example, Ethernet or other hardwire networking technologies. The control system 10 is also suited for use with a wide range of wireless networking technologies, such as radio frequency, power line carrier, optical and other similar technologies. Further, the control system 10 may include a combination of networking technologies. For example, as shown in Fig. 1, the system 10 may include a primary network section 20a and a network extension section 20b that are interconnected by communication interfaces 20c and 20d. The present invention may also include capabilities for remote networking. Internet, point-of-sale cash register systems, wide area networks and local area networks can be use for remote control and monitoring of the control system 10. As shown in Fig. 1, the system 10 may include a data, web page server 22 to provide an interface for various remote networking capabilities. These various networking technologies are well known to those skilled in the art and therefore will not be described in detail.

### B. Local control interface

As noted above, the control system 10 is managed by a local control interface 12. The local control interface 12 may be implemented using a wide variety of circuit components and circuit layouts. Accordingly, the local control interface will vary from application to application. For largely cost reasons, the local control interface is preferably embodied in a dedicated control device having only the necessary hardware components. Alternatively, the local control interface can be embodied in a PC, such as a. desktop, palmtop, or laptop. For purposes of disclosure, a preferred implementation of the local control interface 12 will now be described.

In general, the local control interface 12 includes a display and touch screen 21, a main processor section 22, a network interface processor section 24, a local serial interface section 26, an LCD interface section 28, a touch screen interface section 30 and a power supply section 32. The local control interface 12 preferably includes a conventional color graphic ¼ VGA sized LCD display with an integral analog resistive touch screen for input and output. The display and touch screen provide a graphical user interface ("GUI") for data entry and display. The local control interface 12 can alternatively include other types of touch screens or other conventional input and output devices, such as a keyboard. All user input is performed with the touch screen, primarily by touching buttons or icons on the display. The GUI preferably includes soft-keys which permit the user to navigate through menus as necessary to control and configure the system 10.

Although the main processor section 22 will vary in design and configuration from application to application, in the described embodiment the main processor section 22 includes an AM186EM 16 bit embedded microprocessor 40; two 2 Mbit FLASH reprogrammable firmware memory chips 42 that contain the program executed by the main processor; two 1 Mbit MC434000n static RAM chips 44 that provide memory for temporary data storage, database storage and communications buffers; an address decode section utilizing a GAL 16V 8 programmable logic device 46 that provides input/output interfacing; a synchronous serial interface (not shown) is embedded within the AM186EM microprocessor to communicate with touch screen controller 48; a nonvolatile Real Time Clock RTC 50; two software controlled status light emitting diodes 52 for the indication of program status and verification of reception of a network identification message; a clock 54 having a 20.0 Mhz crystal and discrete components that cause the AM186EM microprocessor to operate at the proper frequency. The main processor 22 preferably also includes an ADM691A power-on reset controller 56 to ensure that the power supply is stable and within proper operating tolerances and that the AM186EM microprocessor is initialized properly. The ADM691A controller preferably includes a watch-dog timer to reset the AM186EM microprocessor in the event of a software hang-up. A battery switch-over circuit (not shown) permits the nonvolatile retention of the database in the event of a loss of power. The battery switch-over circuit includes a disabling device, such as an external jumper, that permits the battery back-up to be disabled for clearing the database as desired. The database may also be cleared through an installer menu function in software on the local control interface.

The network interface processor section 24 provides an I/O space mapped interface to the Echelon LonWorks network and offloads certain low-level functions from the AM186EM processor, such as low-level network protocol and driver functions. The network interface processor 24 generally includes an MC143150B1FU1 Neuron processor 58 or its equivalent that executes an Echelon-supplied software program (e.g. Neuron "C" Program); an AT29C010N FLASH reprogrammable firmware memory chip 60 to contain the Echelon-supplied software program; a 43256AGU static RAM chip 62 for temporary data storage and communication buffers; an address decode section 64; a service switch and LED (not shown) are connected to the Neuron processor to indicate the service status condition of the network processor; a power-on reset controller 56 (essentially shared with main processor section 22) used to ensure that the power supply is stable and within proper operating tolerances; LED indicators 52 (shared with main processor section 22) to indicate the status of network activity and to indicate network processor transmission; and a clock 66 having a 10.0 Mhz. crystal and discrete components causing the Neuron processor 58 to operate at the proper frequency. The network interface processor section 24 also preferably includes an intercontroller network interface section 68 that supplies external network communications from the controller interface to the applications controllers. The network interface processor section 24 preferably includes an FTT10A Free Topology Transceiver (not shown) and its associated circuitry (not shown) and/or, an LT485 EIA485 differential transceiver (not shown) and its associated circuitry (not shown). The specifications of the FTT10A transceiver are described in more detail in "LonWorks FTT-10A Free Topology Transceiver User's Guide," which is published by and available from Echelon Corporation, and is incorporated herein by reference. When the network interface section 24 is used for only FTT10A communication, the FTT10A transceiver (not shown) is connected directly to the Neuron processor (not shown). When the network interface section 24 is used for both FTT10A and EIA485 communication, independently or together, the FTT10A transceiver (not shown) is connected directly to an EIA485 transceiver (not shown) and on to the EIA485 multi-drop network. A one-shot multivibrator (not shown) and inverting Schmidt trigger (not shown) are used to supply a delayed enable signal to the transceiver from the data activity on the FTT10A transceiver. The EIA485 transceiver provides the network connection for the Neuron processor. Alternatively, either the FTT10A and/or the EIA485 on the preferred implementation, or a different interface such as a PLT22 power line transceiver could be used. The actual protocol used is the Echelon LonWorks Manchester-based (for FTT10A or EIA485 interfaces) or the Echelon LonWorks special mode interface (for PLT22 or other power line interfaces). The Echelon LonWorks protocols are well known to those skilled in microcontroller designs. The technology that allows for simultaneous communication sharing between the FTT10A medium and the EIA485 medium is described in U.S. Patent 6,046,657 to Kikta, which is incorporated herein by reference.

The local serial interface section 26 provides an interface between the main processor section 22 and a personal computer or CRT terminal to be used for initialization and database downloading. The local serial interface section 26 preferably includes a MAX202 EIA232 interface transceiver (not shown). The serial port used for communications between the main processor section 22 and the PC is embedded within the AM186 microprocessor.

The LCD display interface section 28 utilizes an SED1374 memory mapped LCD controller 70 to drive the color LCD module. This device performs all the data stream formatting, color look-up table translation, and timing signals needed by the display. A GAL16V8 programmable logic device (not shown) provides the color/monochrome and 4/8 bit display data path translation as required by the different types of LCD displays that can be used with the design.

The touch screen interface section 30 utilizes an ADS7846E touch screen controller/data converter (not shown) in conjunction with two 74HC00 Quad NAND gates to translate the AM186EM microprocessor embedded synchronous serial interface signals to the signals required by the touch screen controller 48. Translation components are well known to those skilled in that art and therefore will not be described in detail. Suffice it to say that the AM186EM microprocessor has a 16 bit serial interface with a bi-directional data line and two mutually exclusive selects, but the touch screen controller requires separate data in and data out lines with a single select. The touch screen interface section 30 also contains transient clamping devices (not shown) and filtering devices (not shown) for the touch screen.

The power supply 32 provides the operating voltages as required by each section of the local control interface 12. The input supply is filtered for EMI and RFI emissions using conventional components (not shown). Overcurrent protection is also provided using conventional components (not shown). For interoperability with certain brands of controllers that use a full-wave-bridge power input structure to rectify a 24 volt AC input, a separate power connection may be provided. The primary supply is an LM2575-5.0 switching step-down converter (not shown) with a fixed output of +5 volts at 1 amp. This supply is used as an input source for all other power supply sections to generate secondary outputs.

The local control interface 12 may also include an Ethernet/phone line interface section 72. This section includes conventional interface circuitry 74, an Ethernet controller 76 with clock 78 and a phone modem 80.

The preceding description of the controller interface 12, including the section configuration and specific circuit components is merely exemplary. The precise configuration of the controller interface 12 will vary from application to application as desired.

### C. Application Controllers

As noted above, the present invention includes a plurality of application controllers 14, 15, 16 and 18 that control operation of corresponding applications, such as HVAC control, access control, system-wide sensors, security and lighting control. The various application controllers are typically capable of operating in stand-alone mode with no intervention from the local control interface 12. Accordingly, each application controller includes generally conventional hardware and software components capable of providing stand-alone control of the corresponding application. To provide control and system-wide integration, the application controllers are capable of exchanging communications with the local control interface 12. Accordingly, each application controller 14, 15, 16 and 18 includes generally conventional hardware components capable of exchanging messages over the communications network.

The following paragraphs describe the general function of the various application controllers supported in the preferred embodiment of the present invention. Each of these application controllers is capable of communicating over a LonWorks network.

The various HVAC application controllers, namely the DXU-1, DXU-2, AHU-1, FCU-1, FCU-2, FCU-3, FCU-4 and HPU-1, are similar in circuit design and general layout. Each of these HVAC controllers 14 generally includes sensor inputs 84, control outputs 86, auxiliary input/output points 88 and a zone sensor/display/interface 90.

The DXU-1 is a self-contained controller for a single zone direct exchange ("DX") package, such as a rooftop DX unit. The DXU-1 controls DX units with up to two stages of heating and two stages of cooling. The DXU-1 maintains the temperature of a space to a defined setpoint. The DXU-1 supports individual setpoints for occupied/unoccupied heat and cool. Control is achieved by sequencing the heating and cooling stages based on the current space requirements. The DXU-1 includes digital inputs for fan status, mixed air low limit indication, smoke detector and filter status. A two wire serial interface is provided for the thermostat and digital outputs in the form of triacs for fan start/stop, two heating stages and two cooling stages. The DXU-1 energizes the fan when there is a call for heating or cooling, and preferably can be overridden from a local thermostat. Each DXU-1 interfaces to a conventional local thermostat that provides a space temperature sensor, temperature setpoint adjustment, occupancy override and a fan auto/on selection. The operating mode of the DXU-1 is normally determined by the local control interface 12. If desired, the DXU-1 may include a local backup schedule to determine operation when the local control interface 12 is unavailable. The DXU-1 monitors the status of the fan. If the fan is energized and no air flow is detected after a predefined period of time, the DXU-1 turns off the fan and all stages of heating and cooling. In addition, an alarm is sent to the local control interface 12. The DXU-1 will return to operation after a reset. The DXU-1 also monitors a digital input for the presence of smoke. If the presence of smoke is detected, the DXU-1 turns off the fan and all stages of heating and cooling. In addition, an alarm is sent to the local control interface 12. The DXU-1 will return to operation after a reset. The DXU-1 further monitors the status of the air filter. An external pressure switch is wired to the input to determine when the filter becomes dirty. The DXU-1 reports an alarm to the local control interface 12 when the filter becomes dirty. The DXU-1 provides mixed air low limit protection. If a low limit condition exists, the DXU-1 turns off the fan and all stages of heating and cooling. In addition, an alarm is sent to the local control interface 12. The DXU-1 will return to operation after a reset. The DXU-1 also monitors the runtime of the cooling stages, heating stages and fan, and reports an alarm to the local control interface when any one of them exceeds its predefined limit. In addition, the DXU-1 preferably reports an alarm to the local control interface when the space temperature drops below a predefined minimum or rises above a predefined maximum. The DXU-1 preferably sends a return to normal alarm when the space temperature returns to the proper range.

The DXU-2 is a self-contained controller for a single zone DX package with an economizer. The DXU-2 controls DX units with up to four stages of cooling, two stages of heating and an economizer. The DXU-2 maintains the temperature of a space to a defined setpoint. The DXU-2 supports individual setpoints for occupied/unoccupied heat and cool. Control is achieved by controlling the economizer position and by sequencing the heating and cooling stages based on the current space requirements. The DXU-2 includes digital inputs for fan status, mixed air low limit indication, smoke detector and filter status, and analog inputs for mixed air temperature, return air humidity and supply air temperature. A two wire serial interface is provided for the thermostat and digital outputs are provide in the form of triacs for fan start/stop, two heating stages, four cooling stages and a two-position economizer. In addition, the DXU-2 may include an analog output to control a modulated economizer (if desired). With the exception of its ability to control four stages of cooling and an economizer, the operation of the DXU-2 is generally identical to that described above in connection with the DXU-1.

The AHU-1 is a self-contained controller for a single zone air handler ("AHU") with a modulated economizer. The AHU-1 controls AHUs with modulated cooling, modulated heating and a modulated economizer. The AHU-1 maintains the temperature of a space to a defined setpoint. The AHU-1 supports individual setpoints for occupied/unoccupied heat and cool. Control is achieved by modulating the economizer dampers, heating valve and cooling valve based on the current space requirements. The AHU-1 preferably includes digital inputs for fan status, freeze indication, smoke detector and filter status, as well as analog inputs for mixed air temperature, return air humidity and supply air temperature. A two wire serial interface is provided for the thermostat. The AHU-1 also includes analog outputs for the heating valve, cooling valve and economizer. The AHU-1 also includes digital outputs for controlling the unit supply fan (in the form of a triac) and for controlling a two-position economizer (if desired). The AHU-1 energizes the fan when there is a call for heating or cooling, and preferably can be overridden from a local thermostat. Each AHU-1 interfaces to a conventional local thermostat that provides a space temperature sensor, temperature setpoint adjustment, occupancy override and a fan auto/on selection. The operating mode of the AHU-1 is normally determined by the local control interface 12. If desired, the AHU-1 may include a local backup schedule to determine operation when the local control interface 12 is unavailable. The AHU-1 monitors the status of the fan. If the fan is energized and no air flow is detected after a predefined period of time, the AHU-1 turns off the fan and closes the heating and cooling valves. In addition, an alarm is sent to the local control interface 12. The AHU-1 will return to operation after a reset. The AHU- monitors an input for the presence of smoke. If the presence of smoke is detected, the AHU-1 turns off the fan and closes the heating and cooling valves. In addition, an alarm is sent to the local control interface 12. The AHU-1 will return to operation after a reset. The AHU-1 further monitors the status of the air filter. An external pressure switch is wired to the input to determine when the filter becomes dirty. The AHU-1 reports an alarm to the local control interface 12 when the filter becomes dirty. The AHU-1 provides mixed air low limit protection. If a low limit condition exists, the AHU-1 turns off the fan and closes the heating and cooling valves. In addition, an alarm is sent to the local control interface 12. The AHU-1 will return to operation after a reset. The AHU-1 also monitors the runtime of the fan and reports an alarm to the local control interface when the runtime exceeds a predefined limit. In addition, the AHU-1 preferably reports an alarm to the local control interface when the space temperature drops below a predefined minimum or rises above a predefined maximum. The AHU-1 preferably sends a return to normal alarm when the space temperature returns to the proper range.

The FCU-1 is a self-contained controller for a two-pipe fan coil unit ("FCU") with a single coil for heating and cooling. The FCU-1 is designed to control commercial unitary HVAC equipment, and more specifically, FCUs with a single modulated valve and fan. The FCU-1 maintains the temperature of a space at a defined setpoint. The FCU supports individual setpoints for occupied/unoccupied heat and cool. Control is achieved by modulating the cooling/heating valve of a single coil two-pipe fan coil unit based on the current space requirements. The FCU-1 can control heating only, cooling only or heating/cooling fan coil units. Automatic seasonal changeover can be provided by a remote pipe mounted temperature sensor that is placed on the supply water line. The control is switched when the sensor detects a change in supply temperature between hot and cold water. The FCU-1 includes a digital input to monitor equipment status, a two wire serial interface for a thermostat, an analog output for the valve and a triac output for the unit supply fan. Each FCU-1 interfaces to a conventional local thermostat that provides a space temperature sensor, temperature setpoint adjustment, occupancy override and a fan auto/on selection. The operating mode of the FCU-1 is normally determined by the local control interface 12. If desired, the FCU-1 may include a local backup schedule to determine operation when the local control interface 12 is unavailable. The FCU-1 monitors the status of equipment within the unit. An external contact may be wired to the input to provide additional equipment safety interlocks. When the contact closes, the FCU-1 shuts the unit down and an alarm is reported to the local control interface. The FCU-1 also monitors the runtime of the fan and reports an alarm to the local control interface when the runtime exceeds a predefined limit. In addition, the FCU-1 preferably reports an alarm to the local control interface when the space temperature drops below a predefined minimum or rises above a predefined maximum. The FCU-1 preferably sends a return to normal alarm when the space temperature returns to the proper range.

The FCU-2 is a self-contained controller for a two-pipe FCU with a single coil for heating and cooling. The FCU-2 is designed to control FCUs with a single floating setpoint valve and fan. The FCU-2 includes a digital input to monitor equipment status, a two wire serial interface for a thermostat, a floating setpoint output for the valve and a triac output for the unit supply fan. The FCU-2 is generally identical in configuration and operation to the FCU-1, except that it is adapted to control a floating setpoint valve. Accordingly, the FCU-2 will not be described in further detail, reference instead being made to the above description of the configuration and operation of the FCU-1.

The FCU-3 is a self-contained controller for a four-pipe FCU with a single coil for heating and cooling. The FCU-3 is designed to control FCUs with dual modulated valves and a fan. The FCU-3 maintains the temperature of a space at a defined setpoint. The FCU supports individual setpoints for occupied/unoccupied heat and cool. Control is achieved by modulating the cooling and heating valves of a dual coil four-pipe fan coil unit based on the current space requirements. The FCU-3 includes a digital input to monitor equipment status, a two wire serial interface for a thermostat, two analog outputs to control the valves and a triac output for the unit supply fan. Like the FCU-2, the FCU-3 is generally identical in configuration and operation to the FCU-1, except that it is adapted to control dual coil four-pipe fan coil unit. Accordingly, the FCU-3 will not be described in further detail, reference instead being made to the above description of the configuration and operation of the FCU-1.

The FCU-4 is a self-contained controller for a four-pipe FCU with a single coil for heating and cooling. The FCU-4 is designed to control FCUs with dual floating setpoint valves and a fan. The FCU-4 includes a digital input to monitor equipment status, a two wire serial interface for a thermostat, two floating setpoint outputs for the valves and a triac output for the unit supply fan. The FCU-4 is generally identical in configuration and operation to the FCU-1, except that it is adapted to control two modulated floating setpoint valves. Accordingly, reference is made to the above description of the configuration and operation of the FCU-1.

The HPU-1 is self-contained controller for liquid source heat pumps. The HPU-1 is designed to control heat pump units with two-stage compressor, reversing valve and fan. The HPU-1 supports individual setpoints for occupied/unoccupied heat and cool. Control is achieved by sequencing the reversing valve and compressor stages of a liquid source heat pump in a conventional manner based on the current space requirements. The HPU-1 include a digital input for monitoring equipment status, a two wire serial interface for the thermostat and digital outputs in the form of triacs for fan start/stop, two compressor stages and a reversing valve. The HPU-1 maintains the temperature of a space to a defined setpoint. The HPU-1 energizes the fan when there is a call for heating or cooling, and preferably can be overridden from a local thermostat. Each HPU-1 interfaces to a conventional local thermostat that provides a space temperature sensor, temperature setpoint adjustment, occupancy override and a fan auto/on selection. The HPU-1 preferably monitors the runtime of the fan and reports an alarm to the local control interface when the runtime exceeds a predefined limit. In addition, the HPU-1 preferably reports an alarm to the local control interface when the space temperature drops below a predefined minimum or rises above a predefined maximum. The HPU-1 preferably sends a return to normal alarm when the space temperature returns to the proper range. The operating mode of the HPU-1 is normally determined by the local control interface 12. If desire, the HPU-1 may include a local backup schedule to determine operation when the local control interface 12 is unavailable.

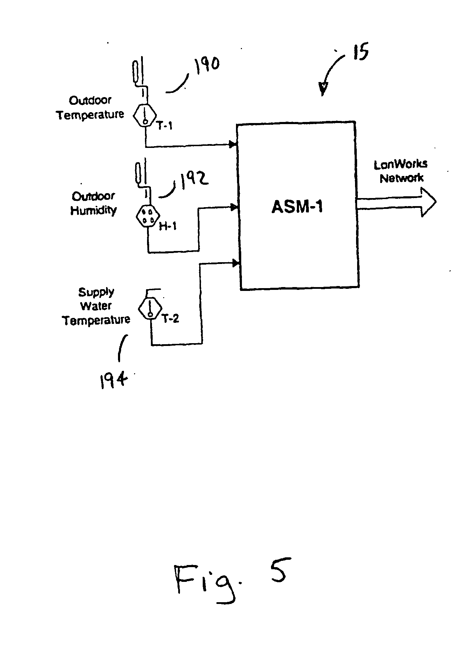

The ASM-1 is an auxiliary sensor module that monitors auxiliary sensors. Like other controllers, the ASM-1 controller is based on LonWorks networking technology. In the preferred embodiment, the ASM-1 is a stand-alone microprocessor based controller having analog inputs for outdoor air temperature 190, outdoor air humidity 192 and/or supply water temperature 194 (See Fig. 5). The values determined by these sensors are provided by the ASM-1 to the local control interface 12 for propagation to other application controllers. The ASM-1 may also include demand meter 196, air quality 198 and other desirable inputs, as well as one or more auxiliary outputs 188.

The ACU-1 is a self-contained controller for controlling and monitoring a single controlled access entryway, for example, to control access to various areas of a facility. The ACU-1 is capable of interfacing with one or two card readers 98 and/or keypads, an electronic door strike and a door monitor contact. The ACU may also interface with a conventional asset tag reader to allow the control system 10 to monitor the movement of tagged assets. Each ACU-1 monitors and controls access to a single entry barrier through the use of an entrance card reader/keypad and an optional exit card reader/keypad. The ACU application controller preferably includes supervised inputs that provide for tamper detection. One input is preferably dedicated to monitoring door status, and another is dedicated to monitoring an exit request pushbutton. Two non-dedicated supervised inputs can be used for monitoring other tamper devices, such as a glass break detector or a motion sensor. The ACU application controller also includes digital outputs that control card reader indicators, such as LEDs and audible sounders. The ACU application controller provides 5 VDC outputs to power the card readers. A separate power supply may be used if a different voltage is required. A relay output is provided to control a barrier locking device, such as a door strike or magnetic lock. Preferably, both normally open and normally closed contract are provided to accommodate barrier locking devices that lock when power is applied or devices that lock when power is off. Alarms are generated when the controller detects that a door has been propped or when a door has been forced open. Alarms are also generated if the two spare supervised inputs have been tampered with.

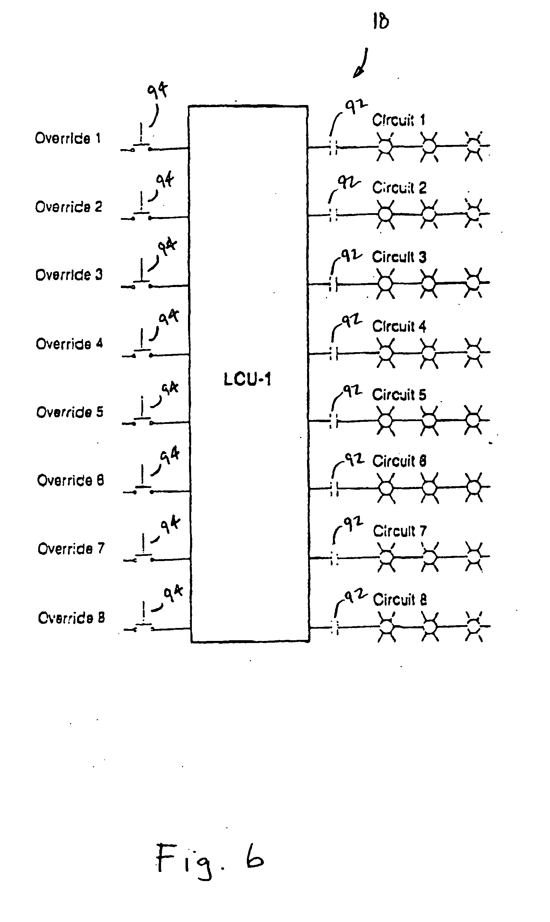

The LCU-1 is a self-contained controller for lighting controls. The LCU-1 is capable of controlling commercial lighting circuits. Typical applications include interior lighting, parking lot lights and signage. In the preferred embodiment, each LCU-1 is capable of controlling eight individual lighting circuits based on the occupancy status of the zone. Control is providing by switching individual lighting relays (or contactors 92) for each circuit. Each circuit preferably includes an override switch 94 that changes the occupancy status of the zone to "occupied" for a predefined period of time (See Fig. 6). The LCU-1 occupancy status is preferably determined by the local control interface 12. If desired, a backup schedule may be provided on the LCU-1 to permit operation when communications with the local control interface 12 have failed. The LCU-1 may also interface with a photo cell 96 in a conventional manner.

The application controllers may be implemented using a wide variety of circuit components and circuit layouts. Accordingly, the application controllers may vary from application to application. In the preferred embodiment, all HVAC and lighting application controllers are realized on a common platform, while the ACU application controllers are realized on a different platform. For purposes of disclosure, a preferred implementations of the HVAC/lighting application controller and a preferred implementation of the access control application controller will be described. The various application controllers may be realized on a single printed circuit board design by varying the component population as required.

In general, the HVAC/lighting application controllers each include a processor section 100, an analog/digital input section 102, a digital output section 104, an analog output section 106, a room sensor/thermostat interface section 108, an intercontroller network interface section 110 and a power supply section 112. The processor section 100 preferably includes an MC143150B1FU1 (or equivalent) Neuron Processor 114 which executes a downloadable Neuron "C" program that contains the operating system, communications routines, data constants, hardware I/O drivers, and the application program unique to each controller type. The processor section 100 also includes a NeuroWire 3-wire serial synchronously-clocked simultaneous input/output interface comprised of IO8 Serial Clock [SCK], 109 Serial Data Output [SDO], and IO10 Serial Data Input [SDI]. The protocol used in this interface is the same as the Motorola Semiconductor SPI or the National Semiconductor Microwire protocols and the actual operation of such is well known to those skilled in microcontroller-based designs. Each device controlled by this interface uses 108 [SCK] and 109 [SDO] and/or IO10 [SDI] as required by each device and a processor I/O pin used as a chip select. The processor section 100 further includes an AT29C010N FLASH reprogrammable firmware memory chip 116 used to contain the Neuron "C" program for the given application controller; a 43256AGU Static RAM chip 118 used for temporary data storage and communication buffers; an address decode section 120 utilizing a 74HCT14 hex inverting Schmidt trigger (not shown) and a 74AC32 quad OR gate (not shown); a service switch 122 and LED 124 are connected to the Neuron processor to invoke and/or indicate the service state condition of the Neuron processor; a DS 1811 power-on reset controller 126 used to ensure that the +5 volt power supply is stable and within proper operating tolerances and that the Neuron processor is initialized properly; a clock 128 having a 10.0 Mhz. crystal and discrete components causing the Neuron processor to operate at the proper frequency.

The analog/digital input section 102 generally includes a LM358 sensor bias supply Op Amp (not shown) used to supply a precise bias reference to sensors that require bias such as a contact closure, or a thermistor that is used as one leg in a voltage divider with readings subsequently normalized by a program look-up table; an input bias and filter circuit for each of seven input channels (UI1 - UI3 and DI1 - DI4) (For example, channel UI1 is comprised of a 10.0K ohm 1% series resistor and a 0.1 uF capacitor for filtering and transient dissipation. Also there is an optional 10.0K ohm 1% contact closure/thermistor bias resistor and an optional 10.0K ohm 1% input divider resistor populated as required by the particular controller types application program sensor needs); an LM4040-5 precision voltage reference (not shown); a TLC1542 or equivalent successive approximation Analog to Digital converter used to convert the inputs to digital values; a TCF6000D (not shown) and BAV99 (not shown) input transient clamp device used to limit the voltages of the input signals presented to the Analog to Digital converter (not shown); and a comparator (not shown) used to generate a chip select signal to the Analog to Digital converter (when used) when the processor asserts the [I07] signal above 3.3 volts. To operate the analog input section, the processor and application program communicate with the AD converter via the NeuroWire synchronous full-duplex peripheral interface comprised of a serial clock (SCK)[IO8], serial data out (SDO)[IO9], and serial data in (SDI)[IO10], and a chip select [IO7]. Suffice it to say that the processor clocks a command in to the converter for a particular channel to be converted while simultaneously clocking out the previous conversion value. The digital input circuitry includes four voltage comparators with hysteresis connected to four discrete I/O lines to the processor. Each circuit has a negative-going input threshold of 1.67 volts and a positive-going threshold of 3.00 volts thereby providing 1.33 volts of hysteresis to prevent false triggering. The output is then coupled to a respective processor I/O line allowing the measurement of digital inputs without the cost or timing constraints of an AD converter for some applications. Both the AD converter and some or all of the digital input comparators may be used in some applications.

The digital output section 104 includes an 8 channel TPIC6x595 NeuroWire-based serial input parallel output open-collector driver (not shown) used to interface to up to eight triac output circuits or up to six BCX70 NPN transistors for direct coupling processor I/O lines to individual triac output circuits. Note that only one or the other approach can be used at one time. The digital output section also includes up to eight triac output circuits each comprised of (output [T01] for example) an MOC3012 optotriac coupler (not shown), a 2.21K ohm coupler LED current limiting resistor, a triac drive and snubber circuit (not shown), a 2N6073B 400 volt 4 amp triac (not shown), and a metal oxide varistor (not shown)..

The analog output section 106 provides three analog outputs, namely [AO1, AO2 and AO3]. For [AO1], the analog output section includes an LM359 Op Amp based 2 pole low pass filter (not shown) with a gain of 2 that converts a high frequency pulse-width modulated 5 volt digital waveform to a 10 volt DC voltage output. For [AO2] and [AO3], the analog output section includes a TLV5625 dual serial input voltage output digital to analog converter (not shown) coupled with an LM358 dual Op Amp (not shown) each configured for a gain of 3 to effect two additional 10 volt DC voltage outputs. This converter is interfaced via the synchronous serial interface. The design supports DA converters of 8/10/12 bits of resolution.

The room sensor/thermostat network interface section 108 supplies operating power as well as communication to the sensor and generally includes an LM317 adjustable voltage regulator (not shown) configured as a 38 milliamp constant current source; an LM339 voltage comparator and associated discrete circuitry used to receive messages from the thermostat network and relay them to the Neuron processor; a dual BCX70 NPN transistor circuit used to sink the current source to ground to effect transmission of data to the room sensors as modulated by processor I/O line(s) [IO2] and/or [109] as required by interface type. The room sensor communicates back to the controller by sinking current in the same manner as the controller. Note that most of the time (even during communication) the network interface is supplying the constant current to the thermostat reservoir capacitor thereby ensuring that the thermostat has adequate operating power. The current protocol used is the proprietary Barber-Colman S-Link (Mu-Link) Sensor Protocol as defined in their confidential internal documentation. Suffice it to say that this is a half-duplex communication interface over a mutually sensed and modulated DC current-limited power line, the mechanics of which have been practiced for many years and the actual operation of such is well known to those skilled in microcontroller-based designs. An alternative that has also been developed uses the same type of mutual sensing and modulation in conjunction with a controller generated Manchester self-clocking (data with inferred clocking via bit cell transition polarity based on the previous data bit) command data stream with a trailing alternating clock/data bit stream for responses. This allows the sensor to be implemented with a very low cost microcontroller that derives all of its communication timing from the controller itself.

The intercontroller network interface section 110 supplies external network communications to the application controller and generally includes an FTT10A Free Topology Transceiver (not shown) and its associated circuitry or an LT485 EIA485 differential transceiver (not shown) and its associated circuitry, as desired. Alternatively, the intercontroller network interface may include a different interface such as the PLT22 power line transceiver. The actual protocol used is the Echelon LonWorks Manchester-based (for FTT10A or EIA485 interfaces) or the Echelon LonWorks special mode interface (for PLT22 or other power line interfaces). The Echelon LonWorks protocols are well known to those skilled in microcontroller designs. The intercontroller network interface also includes a dual LED (not shown) for indication of the status of network activity via an LM339 comparator and controller transmission.

The power supply section 112 supplies internal operating voltages to the application controller and generally includes a half-wave input rectifier diode (not shown), a current limiting resistor (not shown) and input over current protection (not shown); and a +15 volt supply using an LM317 adjustable linear voltage regulator (not shown), with its output set by appropriate resistors. The voltage regulator does not use a bulk input capacitor, but instead allows its output to "droop" between power line half-wave cycles. This substantially reduces the internal heat generated. The power supply further includes a +5 volt supply using an LM78M05 +5 volt linear voltage regulator (not shown); a comparator and DA converter reference circuit generating both 1.67 volt and 3.3 volt bias.

The ACU application controllers use a somewhat different circuit design than the previously described HVAC and lighting application controllers. The ACU is intended to be used in a distributed networked system with specific peripherals and communication medium. As such, the choices for supplied power and networking technology are made as part of the overall system design and may require external modules to implement. Each ACU application controller generally includes central processing section 150, card reader interface circuitry 152, sensor loop interface circuitry 154, relay and digital output interface circuitry 156, intercontroller network interface circuitry 158 and power supply section 160.

The central processing section 150 includes an Echelon 3150 Neuron CPU 162 that provides the applications program, I/O point control, and interface to the Lonworks network via either the FTT10A Free Topology Transceiver or an EIA485 Transceiver, as described in more detail below. The Neuron processor 162 includes an EEPROM 167. The central processing section 150 also includes a 32K Byte Static RAM chip 166, and a GAL logic device 168 for address decoding an external EPROM 164, preferably in the form of a 27C010 Flash ROM chip, for the storage of the operating software as well as the application program. The RAM chip 166 is used to provide additional file buffers for the ACU. The GAL logic device 168 provides the OE*, the WE*, the Flash select, and the RAM select, and also generates the output port latch clock. The central processing section 150 also includes a service pin circuit (not shown). The service pin circuit has two functions: first it is driven by a push button autoconfiguration switch 170 to indicate to the Neuron processor 162 that it is required to request service information as described in the Echelon Documentation, second it drives the service LED 172 in conjunction with a 270 ohm resistor. This initiates the self-configuration of the ACU with the LCI, as described in more detail below. The central processing section 150 further includes a system clock oscillator circuit 174 which generate the system clock used by the Neuron processor 162, preferably at 10 MHz; a reset circuit 176 having a DS1233 low voltage reset controller (not shown), 2 4.99K pull up resistors (not shown) and a . .001uF timing capacitor (not shown) that is used to monitor the +5V power supply for proper levels; and a real time clock 178.

The Neuron processor 162 uses a Motorola 68HC05P6A I/O microcontroller 180 for the direct interface to the card readers, keypads, and the supervised and unsupervised inputs (not shown). The ACU uses the larger address space of the Neuron processor 162 in order to have greater flexibility in the number of bindings and file buffers available. The I/O microcontroller 180 is connected to a system clock oscillator circuit 180 which generates the system clock used by the I/O microcontroller 180; preferably at 4 MHz. The Neuron processor 162 interfaces to the I/O microcontroller 180 via a seven-bit interface. The Neuron processor 162 queries the I/O microcontroller 180 for messages via the DATA_RDY and uses the DATA_SELO, DATA_SEL1, and DATA_TYPE to establish what kind of data and then uses the Neurowire (or SPI) port I/O object to send/receive data to/from the I/O microcontroller 180.

The I/O microcontroller 180 buffers input data from the card reader(s) and/or keypad(s), as well as providing analog and binary inputs. More specifically, supervised input channels are realized via an integral 8 bit 0 to +5 volt analog to digital converter (not shown). The interpretation of an input value is a function of the specific designed use of that input used as a multi-state supervised input. Essentially, a voltage divider made up of the 4.7K ohm loop bias resistors and the end of line resistor installed in each detector is used to determine the state of the loop. The nominal end of line resistor value is 4.7K ohm 5%. The nominal state of the loop with 4.7K ohm is the Normal state. When the end of line resistor changes to 9.4K ohms, a contact open Alarm is reported. When the end of line resistor changes to 2.4K ohms, a contact closed Alarm is reported. When the end of line resistor changes to a short or an open, then a Fault is reported. A transient protector (not shown), plurality of 10K ohm series resistors, and filter capacitors (not shown) are used to limit and filter the supervised inputs. The I/O microcontroller 180 also provides unsupervised inputs that are designed to detect binary contact closures to local common. They are realized via the same type input limiting and filtering circuitry as the supervised inputs. In this instance, the input values are read as digital inputs. The I/O microcontroller 180 further includes card reader track data inputs. The card readers' "0" and "1" inputs (Entry reader is used as an example) are connected to pull up resistors (not shown) and to the transient protectors (not shown) and filter capacitors (not shown). They then go to an inverting Schmidt trigger input device (not shown) and a reader type logic selection GAL (not shown) which is connected to two input port pins on the I/O microcontroller 180. In addition, the reader type logic selection GAL (not shown) is connected to the I/O microcontroller's interrupt line. If the Wiegand mode is selected, both data input lines go to the interrupt. If the magnetic mode is selected only the clock (or "0") line is connected to the interrupt. The reader modes are selected by a DIP switch (not shown). When the I/O microcontroller 180 receives these interrupts in conjunction with either of the two input port pins, it buffers the track data from the reader. The second or exit card reader is interfaced in the same manner. The reset controller 176 of the Neuron processor 162 is to connected to a pull up resistor (not shown) and to the I/O microcontroller's reset line via a diode (not shown) to synchronize the reset of the I/O microcontroller 180. In addition, the Neuron processor 162 can directly reset the I/O microcontroller 180 alone via the IO1 line.

The ACU includes card reader interface circuitry 152 for interfacing the card reader(s) and/or keypad(s) (not shown) to the I/O microcontroller 180. This circuitry 152 is generally conventional and will therefore not be described in detail.

Similarly, the ACU includes sensor loop interface circuitry 154 for interfacing any external sensors (not shown) to the I/O microcontroller 180. This circuitry 154 is generally conventional and will not be described in detail.

The intercontroller network interface circuitry 158 supplies external network communications. The network interface circuitry 158 generally includes an FTT10A Free Topology Transceiver (not shown) and its associated circuitry or an LT485 EIA485 differential transceiver (not shown) and its associated circuitry, as desired. Alternatively, the intercontroller network interface circuitry 158 may include a different interface such as the PLT22 power line transceiver. The actual protocol used is the Echelon LonWorks Manchester-based (for FTT10A or EIA485 interfaces) or the Echelon LonWorks special mode interface (for PLT22 or other power line interfaces). The Echelon LonWorks protocols are well known to those skilled in microcontroller designs. The intercontroller network interface circuitry 158 also includes a dual LED (not shown) for indication of the status of network activity via an HC86 logic gate and controller transmission.

The relay and digital output interface circuitry 156 provides an output interface for controlling external devices, such as an electronic door strike. More specifically, the ACU has eight digital output bits generated via an AC574 latch (not shown). Seven of these eight lines go an MC1413D relay driver device (not shown). One of these seven drives the strike relay (not shown) for the door strike output. The other six supply open collector sinking digital outputs. The eighth line is connected to the base of a transistor (not shown) which drives a high frequency audio indicator (not shown) or a second relay (not shown) which can be used for a second door strike. The latch (not shown) is memory mapped within the Neuron address space and the generation of the rising edge write strobe takes place within the GAL logic device 168 based on the address location, R/W, and E. The open collector outputs of the relay device driver are used to sink up to 50 ma loads. The six open collector outputs are transient protected and generally are used for indicators.

The power supply section 160 is a step down (buck) switchmode converter circuit including an input section containing a series diode and an input filter capacitor. This section provides a half wave rectified, filtered DC bus at approximately the peak of the input voltage. An LM2575M-5.0 converter (not shown) provides an output of +5.0 V via an energy storage inductor (not shown), a commutating diode (not shown), and a filter capacitor (not shown). Most of the pins on the converter are connected to the groundplane for heatsinking purposes. A transient protector (not shown) provides transient protection because the + 5V can be used to power the readers. The power supply section 160 includes supply selection jumpers (not shown) that are used for the reader power selection. Regardless of the supply selected, there are transient protectors (not shown) and series limiters (not shown) for ACU supply protection.

### D. Sensors

Many applications will include one or more integrated sensors that provide information to the application controller. These sensors are typically packaged with and often dedicated to use with the specific application. For example, a DX package unit may include an inside temperature sensor that provides inside temperature to the application controller.

In the preferred embodiment, the control system 10 may also includes various network-wide sensors that provide information to the control system 10, which shares that information with those application controllers that use such information. For example, the control system 10 preferably includes an auxiliary sensor module (ASM-1) (described above) that is a LonWorks communications device which provides input information common to many HVAC control devices, such as outside air temperature, outside air humidity and supply hot water temperature. The local control interface 12 provides the sensed values to the appropriate application controllers over the network. By providing this information universally on the network, the need for separate sensors and individual analog inputs on each HVAC application controller is eliminated.

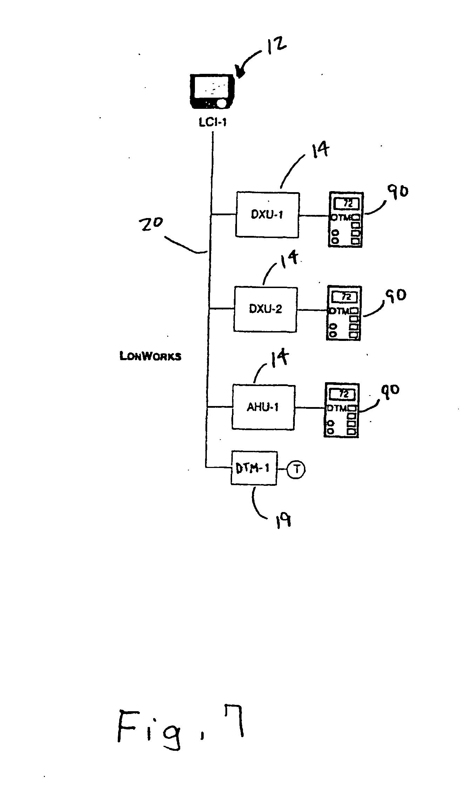

The control system 10 also preferably includes a thermostat module (DTM-1) for interfacing thermostatic functions to HVAC equipment. The thermostat is a self contained intelligent thermostat capable of communicating with various HVAC devices over the LonWorks network. A typical thermostat module system diagram is shown in Fig. 7. The thermostat application includes space temperature, setpoint adjust, fan override and occupancy override. In operation, the thermostat permits adjustment of the space temperature setpoint within predefined limits. The thermostat also preferably includes a push-button override that temporarily changes the occupancy status to "occupied."

The control system 10 may include various other sensor modules that provide information that is provided to a single application controller or that is shared with a plurality of application controllers across the network.

### III. Control System Operation

As noted above, the control system 10 is essentially a distributed system with stand-alone application controllers 14, 15, 16 and 18 capable of operating in the absence of communication with the local control interface 12. The local control interface 12 has the ability, among other things, to monitor and adjust control variables in the various application controllers, thereby affecting operation of the various applications. The control system 10 includes various software components that control operation of the local control interface and application controllers. The design and configuration of these software components will be well within the abilities of one skilled in the art after review of the operation of these components described herein. Accordingly, the software components will not be described in detail.

### A. Operation Overview

The local control interface 12 and application controllers are capable of communicating over a variety of hardwire and/or wireless communication backbones. In the preferred embodiment, the present invention uses Echelon Corporation's LonWorks technology as its communications medium. The network architecture is primarily master/slave with peer-to-peer (i.e., application controller to application controller) communications only as required by some applications. The local control interface 12 initiates most exchanges of communication with the application controllers. All communication exchanges are initiated using LonWorks explicit messages with explicit addressing (i.e. direct 48-bit Neuron ID addressing). The local control interface 12 uses Standard Network Variable Types (SNVTs) for the standard data object model values sent via explicit addressing to each application controller. The application controllers 14, 15, 16 and 18 and the controller interface 12 also provide LonWorks SNVTs for access to system features via third-party LonWorks devices. In operation, the local controller interface 12 does not directly manipulate the third-party device's SNVTs using LonWorks Network Management commands, however, third party networking tools can. Although the present invention preferably operates using LonWorks, the control system is well-suited for use with essentially any private protocols or "plug and play" open communications protocols.

The local control interface 12 preferably includes two modes of operation, namely installer mode and user mode. Installer mode permits the user to access and control all aspects of the local control interface. User mode permits access to only a limited set of commands, thereby reducing the likelihood of accidental or mischievous modification of important system settings. The precise amount of control permitted in user mode can vary from application to application, but in the preferred embodiment, user mode only permits access to and modification of temperature setpoints for controllers, existing schedules and view/acknowledge alarms.

In the preferred embodiment, the local control interface 12 has the ability to divide the network of application controllers 14, 15, 16 and 18 into occupancy groups. The occupancy groups are used to permit collective control of the member application controllers in each group. For example, the lighting and HVAC applications in a given area can be grouped together into a single occupancy group so that those applications can be operated as a group. The local control interface 12 of the preferred embodiment supports 16 occupancy groups. Each occupancy group includes a schedule and a list of up to 62 application controllers. The occupancy status of an occupancy group can be controlled by the corresponding schedule, via an access controller (such as an ACU-1 as described below) or manually using the local control interface 12.

The local control interface 12 preferably supports up to 16 schedules, one for each occupancy group. The schedules may be used for group occupancy control, timed operation of access control, door mode control, door free access control and lighting control. Each schedule preferably supports up to two start/stop time intervals for each day of the week and up to two start/stop intervals for holidays. The local control interface 12 maintains a database of up to 50 holidays. Holidays can be preprogrammed or user defined after installation.

The local control interface 12 also provides control configuration wizards that walk the user through the steps required to monitor and/or set the control variables for a particular application controller. The wizards include easy-to-use graphical setup screens for common configuration items, such as occupied/unoccupied temperature setpoints and backup scheduling and alarm limits.

As noted above, the application controllers 14, 15, 16 and 18 operate in accordance with various control variables that are specified by the user (or through pre-set default values). For example, an HVAC application will include a temperature variable that sets the desired inside temperature for the corresponding area. As in many conventional control systems, the application controllers are capable of operating in two distinct modes, one when the area is occupied and one when it is not. For example, an HVAC application may include a first temperature setting to be satisfied when the area is occupied and a second temperature when the area is not occupied.

Although the application controllers are typically capable of operating in a stand-alone mode, they are capable of communicating with the local control interface 12. Through these communications, the local control interface 12 has the ability to set control variables values within the application controllers using explicit messages and SNVTs for data structures. This permits the local control interface 12 to affect operation of the various system applications. The application controllers are preprogrammed with the data structure or format of all explicit messages associated with the controller type. This permits the application controllers to parse and understand the explicit messages. Alternatively, the applications may be downloaded with this information as necessary, for example, to add new explicit messages or to modify existing explicit messages.

In addition to receiving explicit messages from the local control interface 12, most of the application controllers are capable of sending text-based alarms to the local control interface 12 to indicate extraordinary conditions.

In the described embodiment, the local control interface 12 can support from 1 to 62 application controllers. The local control interface 12 allows modification of inputs and setpoints for each application controller as well as display of outputs for each controller. The local control interface 12 maintains a controller database with certain information concerning each application controller. When application controllers are added to the controller database, they are given a default name (i.e. Unit 1 AHU2) which can be modified by the user to any 20-character string. The controller's name is used when assigning it to occupancy groups and for alarm display. Each element in the controller database preferably includes the following attributes:
Name-18 character ASCII description (user programmable)
Neuron ID - LonWorks 48-bit Neuron ID for device
Program ID - LonWorks Program ID for device (used as device type)
Version ID - ASCII representation of controller's software version
Controller database records for ACU controllers preferably have the following additional attributes:
Exit Group - Group whose occupancy count will be incremented when access attempt successful through exit side of ACU. Entry Group's count will be decremented.
Entry Group - Group whose occupancy count will be incremented when access attempt successful through entry side of ACU. Exit Group's count will be decremented.
Free Access Schedule - specifies a Schedule for controlling ACU's free access status..
ACU will be in Free Access when Schedule is active
Access Mode Schedule― specifies a Schedule for controlling ACU's access mode
Access Mode when Schedule active ― mode (card, card+PIN or cipher) for ACU when Access Mode Schedule is active
Access Mode when Schedule inactive - mode (card, card+PIN or cipher) for ACU when Access Mode Schedule is inactive
Manual Free Access ― forces Free Access active/inactive for ACU
Auto Add on/off ― places ACU in to/out of Automatic Card Addition mode
Manual Access Mode ― forces ACU into card, card+PIN or cipher access mode

### B. Preprogramming of Local Control Interface

As described in some detail above, the local control interface 12 allows users to specify occupancy groups, schedules, holidays and setpoints for the various application controllers. This information may be entered into the local control interface 12 using its touch screen. If desired, this information can be entered into a PC-based program and downloaded into the local control interface 12 via the serial port in the AM186EM main processor.

The control system 10 of the present invention permits self-configuration and integrated operation of application controllers of various types. This is preferably achieved by preprogramming the control system 10 with a configuration table that stores profiles for the various controller types recognized by the system 10. Although the precise information included in these profiles will vary for each application controller, these profiles generally include information about the input SNVTs, output SNVTs and configuration SNVTs of all supported controller types. The table and its associated routines provide for lookup of SNVTs by name, controller type and controller version ID. The LCI maintains another table of supported data types which provides range, base data type, engineering units, enumerations (if applicable), sub-data types (for structured elements), step for increment/decrement and display routines for each data type. All data types used by the LCI have entries in this table. These tables provide the local control interface 10 with sufficient awareness of the application controller to monitor and affect its operation.

In a preferred embodiment, each profile includes a record for each variable supported by the application controller. The record includes a field for variable type, variable name, display name and variable number. The variables are preferably classified in one of three different types--namely, input variables, output variables and input configuration variables. Input variables represent variables that can be sent to the application controller by the local control interface. Output variables represent variables that can sent by the application controller to the local control interface. And finally, input configuration variables are control variables that relate to operation of the application controller, but that are not routinely varied through local control interface 12 commands or otherwise. Each application controller is preferably pre-loaded with default values for all control variables. This facilitates automated configuration, by eliminating the need to provide these control variables with initial values. By way of example, the following is an implementation of the profile for an AHU-1 application controller presented a "C" header file:

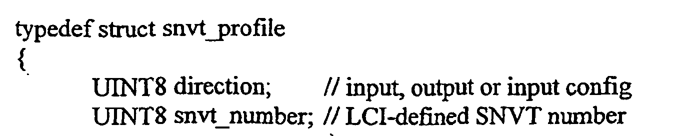

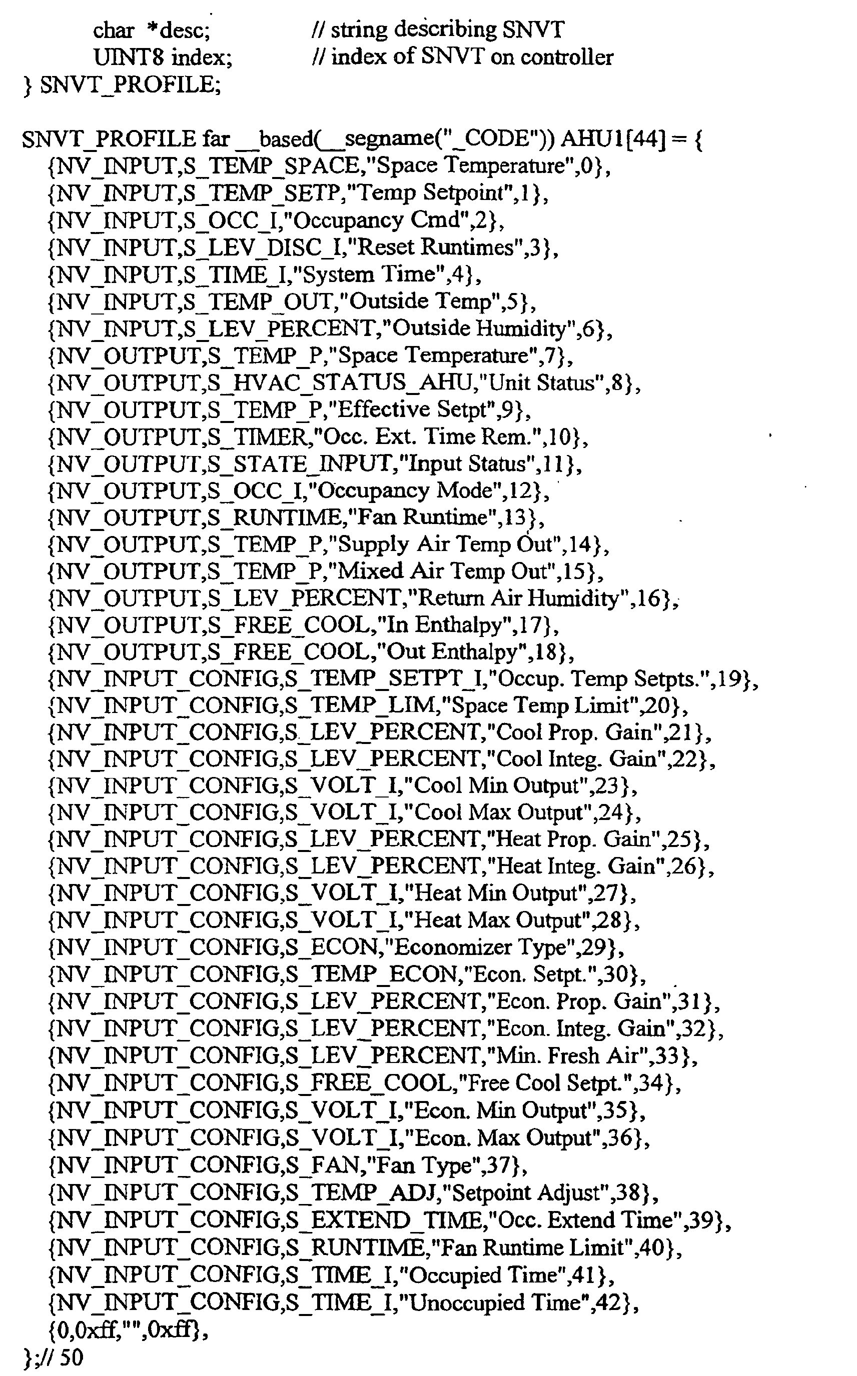

As noted above, the local control interface 12 is also preprogrammed with the format of the various explicit message that may be sent or received by the local control interface. This includes the data structures for the various ping messages to be sent to the application controllers, as well as the ping response messages received from the application controllers. Similarly, each application controllers is preprogrammed with the format of the various explicit messages that may be sent or received by that application controller.

### B. Self Configuration

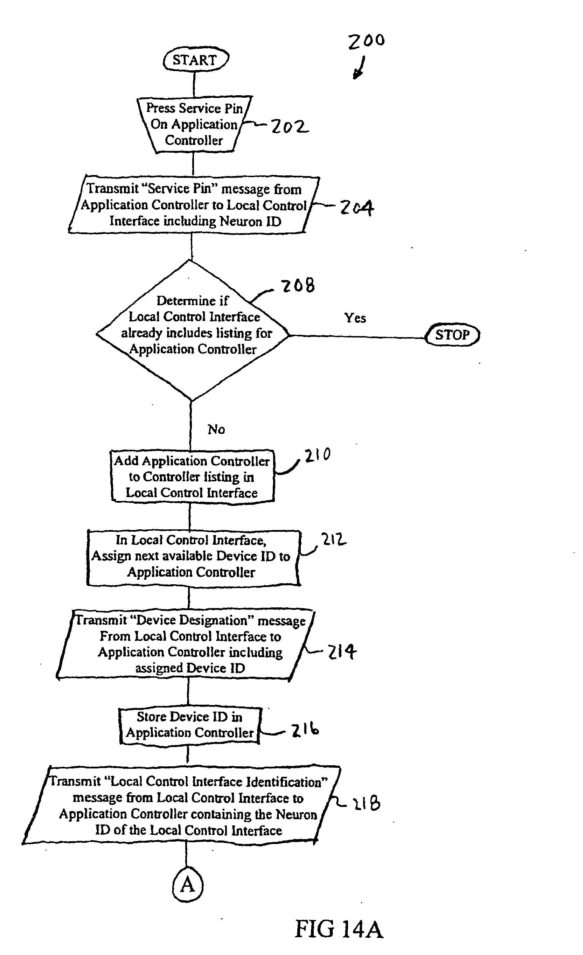

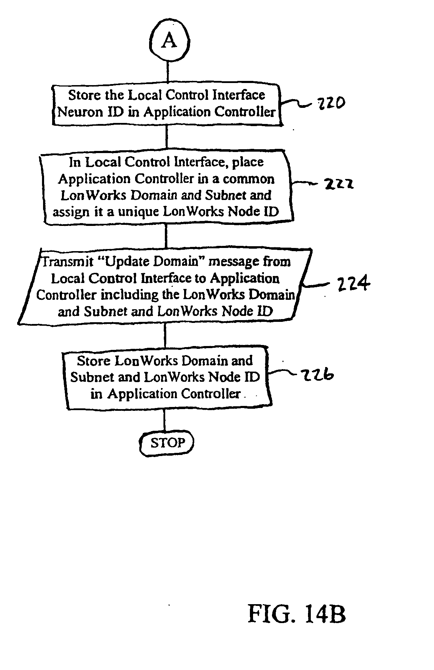

As noted previously, the control system 10 provides self-configuration of the various application controllers 14, 15, 16 and 18. In summary, self-configuration is achieved through a series of communications between the local control interface 12 and the newly installed application controller. The self-configuration process 200 will be described in more detail with reference to the flow chart of Figs. 14A-14B. The communications exchange is initiated by activation 202 of the service control button on the application controller. This causes the application controller to send 204 a LonWorks "Service Pin" message that contains the controller's unique Neuron ID. The local control interface 12 maintains a table in nonvolatile memory that has a listing for each application controller known to the local control interface. When the local control interface 12 receives the service pin message, it determines 208 whether it currently has a listing for the application controller's Neuron ID. If it does not, it creates 210 a listing corresponding to that Neuron ID. The local control interface 12 assigns 212 the next available Device ID number to the new application controller and sends 214 a "Device Designation" message to the application controller. This message contains the Device ID for the application controller. The application controller stores the Device ID 216 in nonvolatile memory for later use in sending messages to the local control interface. The local control interface uses the Device ID from application controller explicit messages to determine which specific controller sent the message. The local control interface then sends 218 a "Controller Interface Identification" message to the application controller, which contains the Neuron ID of the local control interface. The application controller stores 220 the local control interface Neuron ID in nonvolatile memory for later use in sending messages to the local control interface. The local control interface 12 next places 222 the application controller into a common LonWorks Domain and Subnet and assigns a unique LonWorks Node ID. The local control interface 12 sends 224 an "Update Domain" message to the application controller including the common LonWorks Domain and Subnet and the unique LonWorks Node ID, which are stored 226 in the application controller. The Node ID matches the Device ID assigned earlier. This step is necessary to circumvent several inherent problems with LonWorks networking. First, since the local control interface uses LonWorks request/response messages for the "Network Variable Fetch" and "Network Variable Update" operations, all nodes must have a unique subnet/node combination. Responses are always sent using subnet/node addressing requiring a unique subnet/node for each node. Second, the local control interface preferably uses Echelon's Hosted Node architecture which has the limitation of only being able to receive explicit messages in one Domain, which requires each node to be in the same Domain.

The local control interface 10 preferably includes a plurality of wizards that may be run to specify or adjust the control variables for each of the application controller types. These wizards facilitate modification and control of the application controllers by providing a simple menu driven GUI that allows viewing and modification of all appropriate control variables.

### C. Controller Supervision

The local control interface 12 monitors the status of and transfers control variable values between application controllers using a periodic message/response methodology. In the preferred embodiment, the local control interface 12 periodically (e.g. once a second) sends a "ping" message to each application controller. If the application controller fails to send an appropriate response to a specified number of successive pings (e.g. three), it is considered to be in a failure state and appropriate action can be taken, for example, setting an alarm or generating a log. This process is also used to exchange information between the local control interface and the application controller using control variables embedded in the ping message and in the responses to ping messages. The data structure of each ping message is preferably preprogrammed into the local control interface 12. The ping message are preferably tailored to correspond with the type of application controller to which it is sent. Alternatively, a single ping message universal to all controller types can be used. With this alternative, each application controller may simply ignore the control variables that are not relevant to its operation.

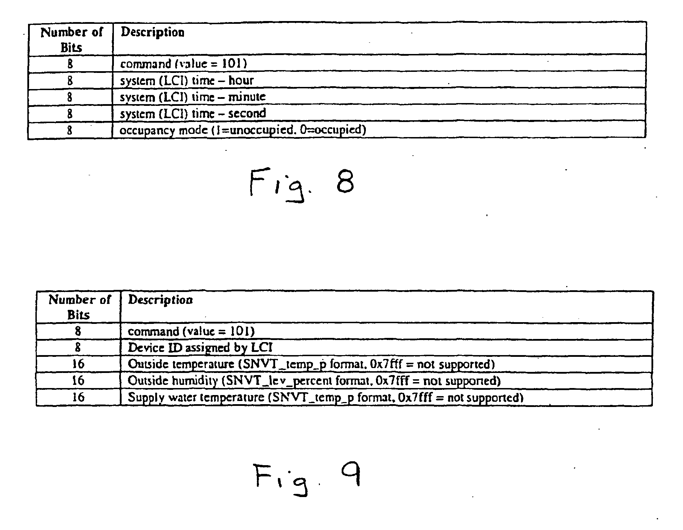

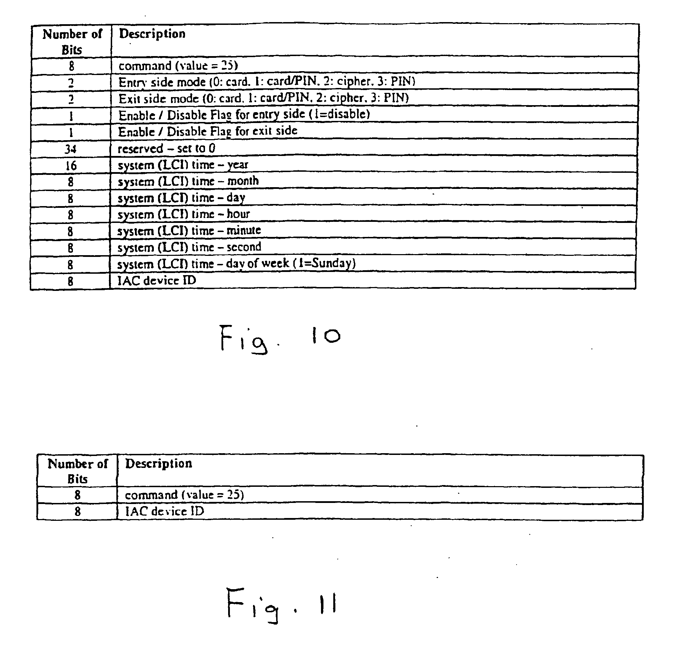

For example, in the described embodiment, the HVAC control ping is periodically sent by the local control interface 12 to each HVAC application controller (e.g. each DXU-1, DXU-2, AHU-1, FCU-1, FCU-2, FCU-3, FCU-4 and HPU-1). The HVAC control ping preferably includes the system time and the occupancy mode for that specific controller. These control variables are sent to each HVAC application controller in an explicit message using SNVTs. A representation of the HVAC control ping is illustrated in Fig. 8. The HVAC controller's response demonstrates that it is still communicating with the network and can be used to return control variables to the local control interface in an explicit message using SNVTs. The HVAC controller's response preferably includes its Device ID, the outside temperature, the outside humidity and the supply water temperature. A representation of the HVAC response is illustrated in Fig. 9. The information received in response from the HVAC controller can be used by the local control interface and/or propagated to other application controllers by the local control interface.

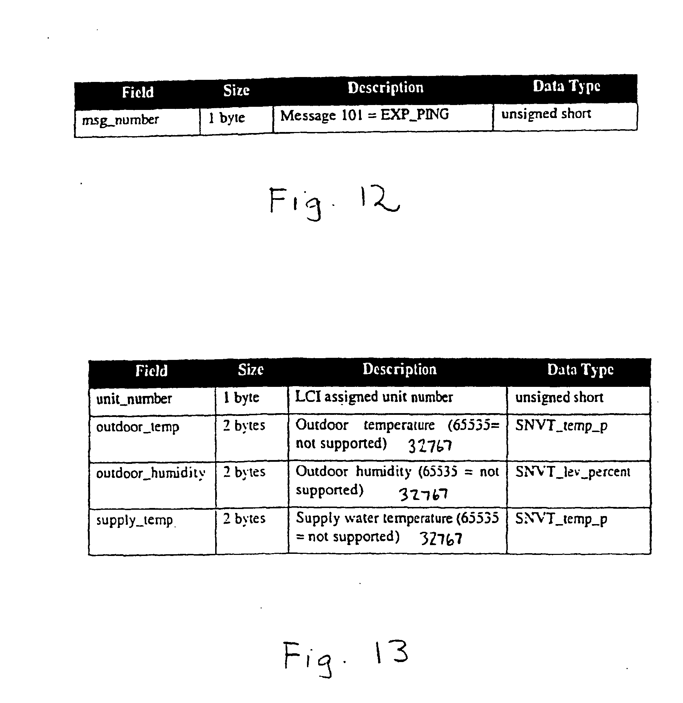

With some application controllers, the ping response is nothing more than an acknowledgement which indicates to the local control interface 12 that the application controller is on line and has received the ping. For example, the access control ping message is periodically sent to each ACU. The access control ping preferably includes entry side mode, exit side mode, enable/disable flag for entry side, enable/disable flag for exit side, system date, system time, system day of week and ACU Device ID. The entry side mode and exit side mode fields indicate the access mode of the ACU. Typically, the ACU will be capable of operating in four different modes: 1) "card" mode, which requires only card validation to obtain access, 2) "card/pin" mode, which requires card validation and entry of a valid PIN to obtain access, 3) "cipher" mode, which requires entry of a valid four-digit code to gain access and 4) "PIN" mode, which requires entry of a valid PIN to gain access. A representation of the ACU control ping is illustrated in Fig. 10. The ACU response simply includes the IAC Device ID. A representation of the ACU response is illustrated in Fig. 11.

As a further example, a representation of the ASM control ping is illustrated in Fig. 12 and a representation of the ASM response to an ASM ping message is illustrated in Fig. 13. As shown, the response returns the outdoor temperature, outdoor humidity and supply water temperature control variables to the local control interface 12. As with all other messages, the control variables are presented as SNVTs.

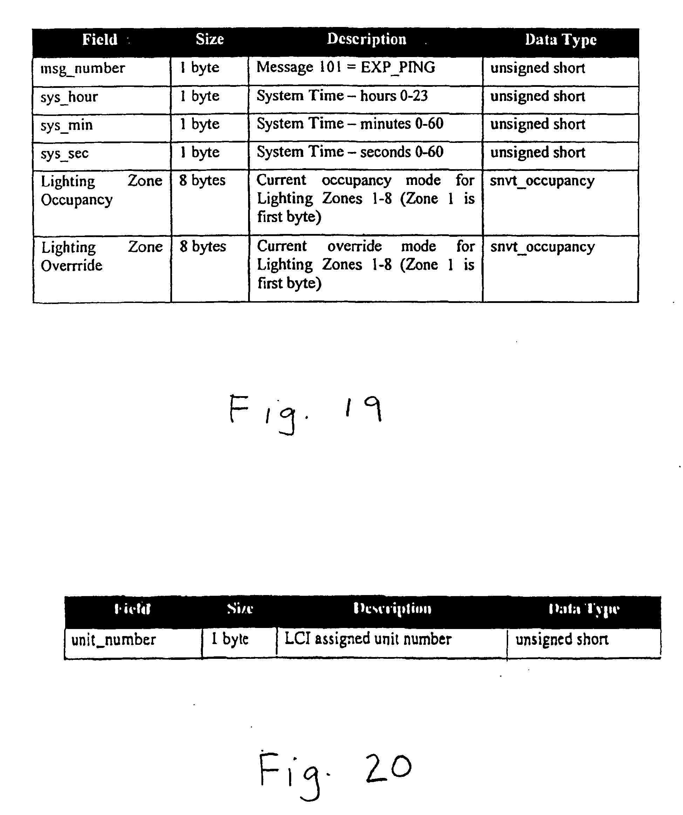

As an additional example, a representation of the LCU control ping is illustrated in Fig. 19 and a representation of the LCU response to an LCU control ping is illustrated in Fig. 20. The LCU control ping is intended solely to solicit a response from the LCU, thereby acknowledging its continued connection to the network. As shown, the control ping includes a message number indicating that the message is a control ping. The LCU response message returns only the unit number to the local control interface.

### D. System wide Distribution of Process Points

The local control interface 12 also has the ability to distribute various process point (or control variable) data to the application controllers. The process point data can be obtained from sensors, such as those connected to the ASM-1 module. In the preferred embodiment, the local control interface 12 receives the process point data from the ASM-1 module, or other sensor, in response to the ping message sent by the local control interface 12. The local control interface 12 then transmits the process point data to the appropriate application controllers via a network variable write using explicit addressing. The local control interface 12 determines the application controllers that need the information by reviewing the controller profiles provided in the profile database. Alternatively, the process point data can be presented to the appropriate application controllers by including it in the ping message sent to that application controller.

### E. Access Control

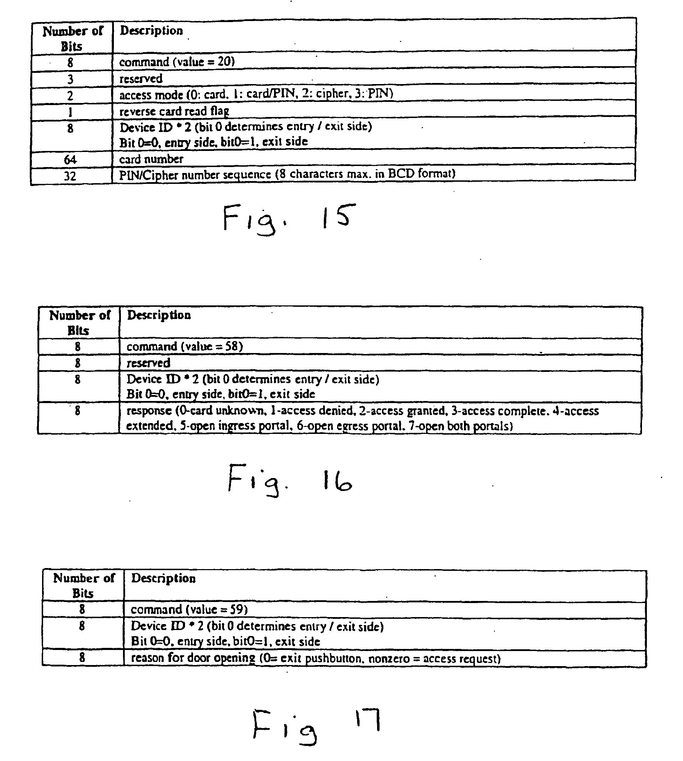

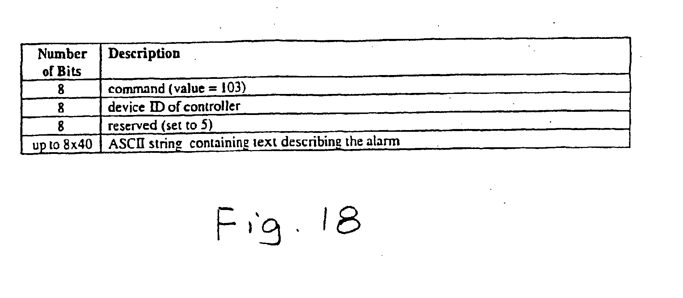

The local control interface 12 oversees access at the various ACUs within the control system 10. In operation, the ACUs send an access request to the local control interface 12 when a valid card reader or keypad entry is obtained from one of the ACU readers/keypads. A representation of the data structure of an access request message is shown in Fig. 15. The access request is processed by the local control interface and a response is sent to the ACU indicating whether or not access is granted. A representation of the data structure of an access response message is shown in Fig. 16. The local control interface 12. also considers any affect access may have on related occupancy groups, for example, changing an "unoccupied" status to "occupied." If appropriate, the local control interface 12 sends explicit messages to update the status of the appropriate occupancy group. This update will typically occur in the next ping message sent to each application controller with the occupancy group. Once a door is used, the ACU sends a door used message to the local control interface 12. This permits the local control interface 12 to maintain a log of activity and a count of the number of persons in the zone. A representation of the data structure of a door used message is shown in Fig. 17.

The control system 10 is preferably capable of operating in five different access modes: 1) "card" mode, which requires reading of a valid card to obtain access, 2) "card/pin" mode, which requires reading of a valid card and entry of a valid PIN to obtain access, 3) "cipher" mode, which requires entry of a valid four-digit code to gain access, 4) "PIN" mode, which requires entry of a valid PIN to gain access and 5) "free" mode, which permits free access. When an access request is received, it is processed in accordance with the current access mode for that ACU.

The local control interface 12 includes a database supporting up to 500 access cards. Each database entry preferably includes a card number (32-bit raw card number), a card name (18 character ASCII description), a PIN (4-digit BCD number used when card+PIN access is desired), a time/date field (containing the time and date on which the card was last used), a last door field (containing the last door at which the card was used) and an access group field (described below). Cards are added to the database in a general conventional manner, for example, by presenting them at an ACU or via download from a PC or other similar device. The local control interface 12 is also capable of storing up to four distinct cipher codes.

The local control interface permits cards to be placed into access groups. Access groups specify which doors a card may access and what time periods the card allowed access. The local control interface preferably supports at least 16 access groups.

The local control interface also permits ACUs to control occupancy for occupancy groups, if desired. To provide ACU occupancy control, the local control interface maintains a person count by tracking the number of entries and exits into an area. If the person count is not zero, the local control interface sets the status of the occupancy group to "occupied."

Although access is preferably governed by the local control interface, each ACU application controller preferably includes a local "per-door" database for validating access in the event of loss of communications with the local control interface. When the ACU send an access request to the local control interface 12 that is not answered within ½ second, the ACU will attempt to validate the access using the local database. When the ACU validates an access request locally, it will also preferably generate a time-stamped transaction log indicating the result of the access attempt.

In a preferred embodiment, the ACUs also detects certain alarm conditions and sends appropriate messages to the local control interface 12 when an alarm event occurs. Preferably, the ACU monitors the status of the supervised inputs to determine when a "door propped," "door forced," or "input tampering" condition occurs. A door propped alarm is generated when an individual, who has gained access, leaves the door open for longer than a predefined access time. A door forced alarm is generated when the door is opened without proper access authorization. A representation of the data structure of an access alarm is shown in Fig. 18.

### F. Lighting Control

The local control interface 12 also manages operation of lighting applications within the building via one or more LCUs. As noted above, the LCUs are designed to control commercial lighting circuits, which may include interior lighting, parking lot lights and signage. In the described embodiment, each LCU controls the state of eight individual lighting circuits. The LCUs provides for eight lighting zones that permit group control of the lighting applications. More specifically, each circuit on each LCU can be associated with one or more of the eight lighting zones. The status of each circuit is affected by controlling the occupancy status of the corresponding lighting zone. The lighting zone associations for each LCU are configured via the local control interface 12. Each LCU maintains a database of the lighting zone associations for each of its circuits. The LCU controls the on/off state of each circuit based on the occupancy status of the zone associated with that circuit. The lighting zones can, in turn, be associated with occupancy groups, thereby permitting the occupancy of lighting zones to be collectively controlled with other applications within a given occupancy group.

The local control interface 12 includes means for transmitting control messages to the LCU to advise the LCU of the occupancy status of the lighting zones. This permits the local control interface 12 to control the occupancy status of the lighting zones in accordance with occupancy group schedules maintained on the local control interface 12, as well as in accordance with other occupancy status changes, such as may be triggered by an access event. In operation, a change in occupancy status for a given zone, whether resulting from a schedule event or from another occupancy effecting event, is transmitted by the local control interface 12 to each LCU. Eight different command messages are used to discern between the eight lighting zones. For example, a first command message is used to communicate the occupancy status of zone 1 and a second command message is used to communicate the occupancy status of zone 2. Upon receipt of the command message, each LCU reviews its database of lighting zone associations to determine if the command message is relevant to any of its circuits. If so, the LCU sets the on/off status of the appropriate circuit(s) in accordance with the occupancy status contained in the command message. Each LCU may also maintain a local back-up copy of the schedule to permit continued operation in the event of a local control interface or network failure.

Each LCU also includes eight inputs used primarily for override switches. Each override switch can be associated with one or more lighting zones so that actuation of the switch affects the occupancy status of these lighting zones. As with the circuits, the lighting zone associations of the inputs are preferably set via the local control interface 12, with each LCU maintaining a local database of the associations for each of its inputs. In operation, actuation of an override switch cause the associated LCU to determine the lighting zones to which the switch is a member and affect the on/off status of all circuits on the LCU associated with that lighting zone. The LCU also sends a peer-to-peer message to all other LCUs on the network indicating the change in the occupancy status of the particular lighting zone. Each of these other LCUs then affects the on/off status of all circuits on that LCU that are associated with the specified lighting zone. This permits integration of override events between LCUs without intervention from the local control interface.

### G. Alarms

Various application controllers have the ability to send text-based alarms to the local control interface 12 to indicate extraordinary conditions, for example, several ACU alarms were described in the immediately preceding section on Access Control. The local control interface 12 has the ability to display and store these alarms. Preferably, each alarm includes a unit name, time/date of occurrence and up to 40 characters of text. The text field can be used to provide meaningful text based descriptions of the alarm event. A representation of the data structure of an alarm is shown in Fig. 18. Although the alarms are preferably responded to manually, the local control interface 12 can be configured to provide an automated response when desirable, for example, the local control interface 12 can be programmed to repeatedly flash the lights in a zone in the event of a "door forced" alarm.

### H. Control Software

As described above, the local control interface and the application controllers operate in accordance with installed control software. Typically, appropriate control software is preloaded into the local control interface and the application controllers. In some applications, this may not be desirable or possible. Accordingly, the local control interface 12 preferably includes means for storing a database of application controller software images and means for downloading the application controller software images into the application controllers. Generally, the application controller software images will be downloaded into the application controller during the self-configuration process to provide the application controller with the applicable control software. The local control interface 12 can, however, be used to download control software to the application controller even after self-configuration. This capability can be used to provide the initial installation of control software on an application controller or to update/upgrade the existing control software on an application controller. Similarly, the local control interface preferably includes means for downloading the control software of the local control interface and means for installing the control software on the local control interface. This functionality is particularly useful in permitting customization and update/upgrade of the control software for the local control software.

In control systems where control software is to be downloaded, the local control interface and/or the application controllers can be preprogrammed with only minimal basic networking and configuration functionality. This minimal programming permits the local control interface and/or application controllers to be installed on the network and provides for the downloading and installation of the control software.

The local control interface 12 preferably includes means to permit the remote downloading of control software, including application controller software images and local control interface software images. This enables the local control interface and the application controllers to be updated/upgraded via a remote Internet, dialed or direct connection.

A flexible alternative to conventional control software is to preprogram the local control interface and/or application controllers with a generic programming language that permits operation of the device in accordance with custom control programs downloaded after self-configuration. The generic programming language provides an engine capable of controlling operation of a device in accordance with instructions contained in the custom control program. In this alternative, the local control interface includes means for downloading custom control programs from a remote Internet, dialed or direct connection and/or for creating custom control programs, as well as means for downloading the custom control programs to the appropriate application controllers.

The above description is that of a preferred embodiment of the invention. Various alternations and changes can be made without departing from the invention as described herein and as defined in the appended claims, which are to be interpreted in accordance with the principles of patent law. Any reference to claim elements in the singular, for example, using the articles a, an, the or said, is not to be construed as limiting the element to the singular.

## Claims

1. A building control system (10) for controlling automated applications in a building environment comprising: a communications network (20); a plurality of application controllers (14, 15, 16, 18) connected to said communications network, each of said application controllers including means for controlling operation of a corresponding automated device, and a control interface (12) connected t said communications network, said control interface including a database said system comprising self-configuration means for providing automated configuration of each of said application controllers on said network, and **characterised in that** each of said application controllers includes a controller type; said database comprising at least one profile for an application controller type; said self-configuration means including means for conveying said controller type of said application controller from said application controller to said control interface, said self-configuration means further including means for configuring said application controller based on said profile corresponding to said controller type of said application controller.

2. The building control system (10) of claim 1 wherein each of said application controllers (14, 15, 16, 18) controls operation of said corresponding automated device in accordance with at least one variable; and wherein said control interface (12) includes means for controlling operation of said application controller by specifying a value of said variable

3. The building control system (10) of claim 2 wherein said control interface (12) includes means for transmitting explicit messages to said application controllers, each of said explicit messages including an identification unique to a specific one of said application controllers (14, 15, 16, 18); and said application controllers each including means for receiving said explicit messages from said control interface, said means for receiving including means for recognizing only those of said explicit messages which include an identification unique to said application controller in which said means for receiving resides.

4. The building control system (10) of claim 3 wherein said means for transmitting explicit messages include means for incorporating said value of said variable

5. The building control system (10) of claim 4 wherein each of said application controllers (14, 15, 16, 18) include an occupancy status; said control interface (12) including means for grouping a plurality of application controllers into an occupancy group; and means for defining said occupancy status of each of said application controllers in a given occupancy group as a group

6. The building control system (10) of claim 3 wherein said control interface (12) includes means for monitoring a status of each of said application controllers, said means for monitoring including a means for periodically transmitting a ping to each of said application controllers and a means for receiving a response to said ping from each of said application controllers.

7. The building control system (10) of claim 6 wherein each of said application controllers (14, 15, 16, 18) includes a means for receiving said ping from said control interface (12) and a means for transmitting a response to said ping to said control interface.

8. The building control system (10) of claim 3 wherein said plurality of application controllers (14, 15, 16, 18) includes at least one HVAC application controller (14), at least one lighting application controller (18) and at least one access control application (16).

9. The building control system (10) of claim 3 wherein said local control interface (12) further includes: a database of application controller control software images; and means for downloading said control software images into at least one of said application controllers.

10. The building control system (10) of claim 9 further comprising means for downloading said application controller control software images into said local control interface from an external source, whereby said application controller control software images can be upgraded

11. The building control system (10) of claim 3 wherein said local control interface (12) further includes means for downloading a local control interface control software image into said local control interface.

12. The building control system (10) of claim 11 further comprising means for downloading said local control interface control software image into said local control interface (12) from an external source, whereby said local control interface control software images can be upgraded

13. The building control system (10) of claim 3 wherein at least one of said local control interface (12) and said application controllers (14, 15, 16, 18) is preprogrammed with a generic programming language and includes means for downloading a control program to be run by said programming language to define operation of at least one of said local control interface and said application controllers.

## Revendications

1. Système de commande pour bâtiment (10) pour la commande d'applications automatisées dans un environnement de bâtiment comprenant: un réseau de communications (20); plusieurs dispositifs de commande d'application (14, 15, 16, 18) connectés audit réseau de communications, chacun desdits dispositifs de commande d'application possédant des moyens pour commander le fonctionnement d'un dispositif automatisé correspondant, ainsi qu'une interface de commande (12) connectée audit réseau de communications, ladite interface de commande comprenant une base de données ; ledit système comprenant des moyens d'auto-configuration pour permettre la configuration automatisée de chacun desdits dispositifs de commande d'application sur ledit réseau; et **caractérisé en ce que** chacun des dispositifs de commande d'application comprend un type de dispositif de commande ; ladite base de données comprend au moins un profil par type de dispositif de commande d'application; lesdits moyens d'auto-configuration comprennent des moyens pour transmettre ledit type de dispositif de commande dudit dispositif de commande d'application, du dispositif de commande d'application vers ladite interface de commande, lesdits moyens d'auto-configuration comprennent en plus des moyens permettant de configurer ledit dispositif de commande d'application sur base dudit profil correspondant audit type de dispositif de commande dudit dispositif de commande d'application.

2. Système de commande pour bâtiment (10) selon la revendication 1 dans lequel chacun desdits dispositifs de commande d'application (14, 15, 16, 18) commande le fonctionnement dudit dispositif automatisé correspondant conformément à au moins une variable; et dans lequel ladite interface de commande (12) comprend les moyens de commander le fonctionnement dudit dispositif de commande d'application en spécifiant une valeur de ladite variable.

3. Système de commande pour bâtiment (10) selon la revendication 2, dans lequel ladite interface de commande (12) comprend des moyens pour transmettre des messages explicites auxdits dispositifs de commande d'application, chacun desdits messages explicites contient une identification unique spécifique à un desdits dispositifs de commande d'application (14, 15, 16, 18); et lesdits dispositifs de commande d'application comprennent chacun des moyens permettant de recevoir lesdits messages explicites de l'interface de commande, lesdits moyens de réception comprennent des moyens permettant de reconnaître seulement ceux desdits messages explicites qui comprennent une identification unique audit dispositif de commande d'application dans lequel lesdits moyens de réception résident.

4. Système de commande pour bâtiment (10) selon la revendication 3 dans lequel lesdits moyens de transmission des messages explicites comprennent des moyens pour incorporer ladite valeur de ladite variable dans ledit message explicite.

5. Système de commande pour bâtiment (10) selon la revendication 4 dans lequel chacun desdits dispositifs de commande d'application (14, 15, 16, 18) comprend un état d'occupation ; ladite interface de commande (12) comprend des moyens permettant de regrouper plusieurs dispositifs de commande d'application dans un groupe d'occupation; et des moyens permettant de définir ledit état d'occupation de chacun desdits dispositifs de commande d'application d'un groupe d'occupation comme un groupe.

6. Système de commande pour bâtiment (10) selon la revendication 3 dans lequel ladite interface de commande (12) comprend des moyens permettant de surveiller un état de chacun desdits dispositifs de commande d'application, lesdits moyens de surveillance comprennent des moyens pour transmettre périodiquement un signal de localisation à chacun desdits dispositifs de commande d'application et des moyens de recevoir une réponse audit signal de la part de chacun desdits dispositifs de commande d'application.

7. Système de commande pour bâtiment (10) selon la revendication 6 dans lequel chacun desdits dispositifs de commande d'application (14, 15, 16, 18) comprend un moyen pour recevoir ledit signal de localisation de ladite interface de commande (12) et un moyen pour transmettre une réponse audit signal de localisation à ladite interface de commande.

8. Système de commande pour bâtiment (10) selon la revendication 3 dans lequel plusieurs dispositifs de commande d'application (14, 15, 16, 18) comprennent au moins un dispositif de commande d'application « Chauffage, Ventilation et Climatisation » (14), au moins un dispositif de commande d'application « Eclairage » (18) et au moins une application de commande d'accès (16).

9. Système de commande pour bâtiment (10) selon la revendication 3 dans lequel ladite interface de commande locale (12) comprend en plus: une base de données d'images du logiciel de commande du dispositif de commande d'application; et des moyens pour télécharger lesdites images du logiciel de commande dans au moins un desdits dispositifs de commande d'application.

10. Système de commande pour bâtiment (10) selon la revendication 9 comprenant en plus des moyens pour télécharger lesdites images du logiciel de commande du dispositif de commande d'application dans ladite interface de commande locale à partir d'une source externe, ce par quoi lesdites images du logiciel de commande du dispositif de commande d'application peuvent être mises à jour.

11. Système de commande pour bâtiment (10) selon la revendication 3 dans lequel ladite interface de commande locale (12) comprend en plus des moyens pour télécharger une image du logiciel de commande d'une interface de commande locale dans ladite interface de commande locale.

12. Système de commande pour bâtiment (10) selon la revendication 11 comprenant en plus des moyens pour télécharger ladite image du logiciel de commande de l'interface de commandé locale dans ladite interface de commande locale (12) à partir d'une source externe, ce par quoi lesdites images du logiciel de .commande de l'interface de commande locale peuvent être mises à jour.

13. Système de commande pour bâtiment (10) selon la revendication 3 dans lequel au moins un parmi ladite interface de commande (12) et lesdits dispositifs de commande d'application (14, 15, 16, 18) est préprogrammé à l'aide d'un langage de programmation générique et comprend des moyens pour télécharger un programme de commande devant s'exécuter par ledit langage de programmation pour définir le fonctionnement d'au moins un parmi ladite interface de commande locale et lesdits dispositifs de commande d'application.

## Patentansprüche

1. Grebäudesteuerungssystem (10) zur Steuerung automatisierter Anwendungen in einem Gebäudernfeld welches aufweist ein Kommunikationsnetzwerk (20); eine Vielzahl an Anwendungs-Steuereinheiten (14, 15, 16, 18), die mit dem Kommunikationsnetzwerk verbunden sind, wobei jede der Anwendungs-Steuereinheiten Mittel beinhaltet, um den Betrieb einer zugehörigen automatisierten Einheit zu steuern, sowie eine mit dem Kommunikationsnetzwerk verbundene Steuerungs-Schnittstelle (12), wobei die Stenenmgs-Schnittstelle eine Datenbank beinhaltet; wobei das System Eigenkonrigurations-Millei aufweist, um eine automatisierte Konfiguration von jeder der Anwendungs-Steuereinheiten in dem Netzwerk bereitzustellen; und **dadurch gekennzeichnet, dass** jede der Anwendungs-Steuereinheiten einen Stcuemiuheits-Typ beinhaltet; die Datenbank zumindest ein Profil für einen Anwendungs-Steuereinheits-Typ aufweist; die Eigenkonfigurations-Mittel Mittel zum Übertragen des Steuereinheits-Typs der Anwendungs-Steuereinheit von der Anwendungs-Steuereinheit zu der Steuerungs-Schnittstelle beinhalten, wobei die Eigenkonfigurations-Mittel weiters Mittel beinhalten um die Anwendungs-Steuereinheit auf der Basis des zu dem Steuereinheits-Typ der Anwendungs-Steuereinheit gehörenden Profils zu konfigurieren.

2. Gebäudesteuerungssystem (10) nach Anspruch 1, wobei jede der Anwendungs-Steuereinheiten (14, 15, 16, 18) den Betrieb der zugehörigen automatisierten Einheit in Übereinstimmung mit zumindest einer Variablen steuert; und wobei die Steuerungs-Schnittstelle (12) Mittel zur Steuerung des Betriebs der Anwendungs-Steuereinheit beinhaltet, indem ein Wert der Variablen festgelegt wird.

3. Gebäudesteuerungssystem (10) nach Anspruch 2, wobei die Steuerungs-Schnittstelle (12) Mittel zum Übertragen eindeutiger Nachrichten an die Anwendungs-Steuereinheiten beinhaltet, wobei jede der eindeutigen Nachrichten eine Kennung beinhaltet, die für eine genau bezeichnete der Anwendungs-Steuereinheiten (14, 15, 16, 18) einzigartig ist; und wobei jede der Anwendungs-Steuereinheiten Mittel zum Empfangen der eindeutigen Nachrichten von der Steuerungs-Schnittstelle aufweist, wobei die Mittel zum Empfangen Mittel zum Erkennen nur derjeniger aus den eindeutigen Nachrichten beinhalten, die eine Kennung beinhalten, die einzigartig für die Anwendungs-Steuereinheit ist, in welcher sich das Mittel zum Empfangen befindet.

4. Gebäudesteuerungssystem (10) nach Anspruch 3, wobei die Mittel zum Übertragen eindeutiger Nachrichten Mittel beinhalten, um den Wert der Variable in die eindeutige Nachricht einzubinden.

5. Gebäudesteuerungssystem (10) nach Anspruch 4, wobei jede der Anwendungs-Steuereinheiten (14, 15, 16, 18) einen Belegungsstatus beinhaltet; wobei die Steuerungs-Schnittstelle (12) Mittel beinhaltet, um eine Vielzahl von Anwendungs-Steuereinheiten in eine Belegung-Gruppe zu gruppieren; und Mittel, um den Belegungsstatus von jeder der Anwendungs-Steuereinheiten in einer vorgegebonen Belegungsgruppe als eine Gruppe zu definieren.

6. Gebäudesteuerungssystem (10) nach Anspruch 3, wobei die Steuerungs-Schnittstelle (12) Mittel zum Überwachen eines Status von jeder der Anwendungs-Steuereinheiten beinhaltet, wobei die Mittel zum Überwachen ein Mittel beinhalten, um periodisch ein Ping-Signal an jede der Anwendungs-Steuereinheiten zu senden und ein Mittel, um eine Antwort auf das Ping-Signal von jeder der Anwendungs-Steuereinheiten zu empfangen.

7. Gebäudesteuerungssystem (10) nach Anspruch 6, wobei jede der Anwendungs-Steuereiheiten (14, 15, 16, 18) ein Mittel zum Empfangen des Ping-Signals von der Steuerungs-Schnittstelle (12) und ein Mittel zum Senden einer Antwort auf das Ping-Signal an die Steuerungs-Schnittstelle beinhaltet.

8. Gebäudesteuerungssystem (10) nach Anspruch 3, wobei die Vielzahl der Anwendungs-Steuereinheilen (14, 15, 16, 18) zumindest eine HVAC(Helzung/Lüftung/Klima)-Anwendungs-Steuereinheit (14), zumindest eine Beleuchtungs-Anwendungs-Steuereinheit (18) und zumindest eine Zugangskontroll-Anwendung (16) beinhaltet.

9. Gebäudesteuerungssystem (10) nach Anspruch 3, wobei die lokale Steuerungs-Schnittstelle (12) weiters beinhaltet: eine Datenbank mit Abbildern von Steuerungssoftware für Anwendungs-Steuereinheiten; und Mittel zum Herunterladen der Steuerungssoftware-Abbilder in zumindest eine von den Anwendungs-Steuereinheiten.

10. Gebäudesteuerungssystem (10) nach Anspruch 9, welches weiters Mittel für das Herunterladen der Abbilder von Steuerungssoftware für Anwendungs-Steuereinheiten von einer externen Quelle in die lokale Steuerungs-Schnittstelle aufweist, wobei die Abbilder von Steuerungssoftware für Anwendungs-Steuereinheiten aktualisierbar sind.

11. Gebäudesteuerungssystem (10) nach Anspruch 3, wobei die lokale Steuerungs-Schnittstelle (12) weiters Mittel zum Herunterladen eines Abbildes von Steuerungssoftware für eine lokale Steuerungs-Schnittstelle in die lokale Steuerungs-Schnittstelle beinhaltet.

12. Gebäudesteuerungssystem (10) nach Anspruch 11, welches weiters Mittel zum Herunterladen des Abbildes von Steuerungssoftware für eine lokale Steuerungs-Schnittstelle von einer externen Quelle in die lokale Steuerungs-Schnittstelle (12) aufweist, wobei die Abbilder von Steuerungssoftware für eine lokale Steuerungs-Schnittstelle aktuallisierbar sind.

13. Gebäudesteuerungssystem (10) nach Anspruch 3, wobei zumindest eine ans der lokalen Steuerungs-Schnittstelle (12) und den Anwendungs-Steuereinheiten (14, 15, 16, 18) in einer generischen Programmiersprache vorprogrammiert ist und Mittel zum Herunterladen eines Steuerungsprogramms beinhaltet, das durch die Programmiersprache verarbeitbar ist, um den Betrieb von zumindest einem aus der lokalen Steuerungs-Schnittstelle und den Anwendungs-Steuereinbeiten definiert.
